# EUROPEAN PATENT APPLICATION

(11) **EP 3 404 519 A1**
(43) Date of publication of application: **21.11.2018**
(21) Application number: 17741644.3
(22) Date of filing: 18.01.2017
(51) Int. Cl.: G06F 3/048, G06F 3/0485, G06F 3/0488

(54) **METHOD FOR DISPLAYING USER INTERFACE AND ELECTRONIC DEVICE FOR SUPPORTING SAME**

(30) Priority: 19.01.2016 KR 20160006251
(71) Applicant: Samsung Electronics Co., Ltd., Suwon-si, Gyeonggi-do 16677 (KR)
(72) Inventor: LEE, Ho Young, Seoul 05265 (KR); KIM, Gyuchual, Bucheon-si Gyeonggi-do 14769 (KR)
(74) Representative: Nederlandsch Octrooibureau
(86) International application number: PCT/KR2017/000595
(87) International publication number: WO 2017/126878

(57) **Abstract**

A method for displaying a user interface by an electronic device according to various embodiments of the present invention may comprise displaying a plurality of items on a screen, displaying a first object including an index relating to at least one item among the plurality of displayed items, scrolling the plurality of items, at least on the basis of a user input, and changing a form of the first object, at least on the basis of an attribute of at least one item displayed by the scroll operation.

## Description

### Technical Field

The present disclosure relates to a method for displaying a user interface and an electronic device supporting the same.

### Background Art

Electronic devices support various functions via various applications. For example, electronic devices provide a contacts function (or a phonebook function), a messenger function, a file management function, and the like via various applications. The electronic devices display a plurality of pieces of data on a screen while the above-described functions are executed.

When it is difficult to display a plurality of pieces of data on a screen at the same time, the electronic devices display a part of the data, and may use a scrolling operation to display, on the screen, the remaining data that has not been displayed on the screen. Also, the electronic device may provide a scroll bar including an index, making it easy for a user to search for desired data.

### Detailed Description of the Invention

### Technical Problem

Various embodiments of the present disclosure relate to a method of displaying a user interface and an electronic device supporting the same, which provide an object reflecting the attributes of data displayed while scrolling the plurality of pieces of data, thereby visually and intuitively providing data.

### Technical Solution

In accordance with an aspect of the present disclosure, there is provided a method of displaying a user interface by an electronic device according to various embodiments of the present disclosure, the method including: displaying a plurality of items on a screen; displaying a first object including an index related to at least one item from among the plurality of displayed items; scrolling the plurality of items, based at least on a user input; and changing the form of the first object, based at least on an attribute of at least one item displayed by the scrolling operation.

In accordance with another aspect of the present disclosure, there is provided an electronic device, the electronic device including: a display; and a processor, wherein the processor is configured to perform: displaying a plurality of items on a screen; displaying a first object including an index related to at least one item from among the plurality of displayed items; scrolling the plurality of items, based at least on a user input; and controlling the display so as to change a form of the first object, based at least on an attribute of the at least one item displayed by the scrolling operation.

### Advantageous Effects

A method of displaying a user interface and an electronic device supporting the same according to various embodiments of the present disclosure provide an object reflecting the attributes of data displayed while scrolling the plurality of pieces of data, thereby visually and intuitively providing data.

### Brief Description of the Drawings

FIG. 1 is a diagram illustrating a network environment including an electronic device according to various embodiments of the present disclosure;
FIG. 2 is a block diagram of an electronic device according to various embodiments of the present disclosure;
FIG. 3 is a block diagram of a program module according to various embodiments;
FIG. 4 is a flowchart illustrating a method of providing a user interface according to an embodiment of the present disclosure;
FIG. 5 is a diagram illustrating a method of providing a user interface according to an embodiment of the present disclosure;
FIG. 6 is a diagram illustrating a method of providing a user interface according to another embodiment of the present disclosure;
FIG. 7 is a diagram illustrating a method of providing a user interface according to another embodiment of the present disclosure;
FIG. 8 is a diagram illustrating a method of providing a user interface according to another embodiment of the present disclosure;
FIG. 9 is a diagram illustrating a method of providing a user interface according to another embodiment of the present disclosure;
FIG. 10 is a diagram illustrating a method of providing a user interface according to another embodiment of the present disclosure;
FIG. 11 is a flowchart illustrating a method of providing a user interface according to another embodiment of the present disclosure;
FIG. 12 is a diagram illustrating a method of providing a user interface according to an embodiment of the present disclosure;
FIG. 13 is a diagram illustrating a method of providing a user interface according to another embodiment of the present disclosure;
FIG. 14 is a flowchart illustrating a method of providing a user interface according to another embodiment of the present disclosure;
FIG. 15 is a diagram illustrating a method of providing a user interface according to an embodiment of the present disclosure;
FIG. 16 is a diagram illustrating a method of providing a user interface according to another embodiment of the present disclosure;
FIG. 17 is a diagram illustrating a method of providing a user interface according to another embodiment of the present disclosure;
FIGs. 18 and 19 are diagrams illustrating a method of providing a user interface according to an embodiment of the present disclosure;
FIG. 20 is a diagram illustrating a method of providing a user interface according to another embodiment of the present disclosure; and
FIG. 21 is a diagram illustrating a method of providing a user interface according to another embodiment of the present disclosure.

### Mode for Carrying Out the Invention

Hereinafter, various embodiments of the present disclosure will be described with reference to the accompanying drawings. It should be understood that embodiments and terms used for the embodiments are no intent to limit the present disclosure to the particular forms disclosed herein; rather, the present disclosure should be construed to cover various modifications, equivalents, and/or alternatives of embodiments of the present disclosure. In describing the drawings, similar reference numerals may be used to designate similar constituent elements. As used herein, singular forms may include plural forms as well unless the context clearly indicates otherwise. In the present disclosure, the expression "A or B", "at least one of A or/and B", or "one or more of A or/and B" may include all possible combinations of the items listed. The expression "a first", "a second", "the first", or "the second" used in various embodiments of the present disclosure may modify various components regardless of the order and/or the importance but does not limit the corresponding components. It should be understood that when an element (e.g., first element) is referred to as being (operatively or communicatively) "connected," or "coupled," to another element (e.g., second element), it may be directly connected or coupled directly to the other element or any other element (e.g., third element) may be interposer between them.

The expression "configured to" used in the present disclosure may be exchanged with, for example, "suitable for", "having the capacity to", "designed to", "adapted to", "made to", or "capable of" according to the situation. The term "configured to" may not necessarily imply "specifically designed to" in hardware. Alternatively, in some situations, the expression "device configured to" may mean that the device, together with other devices or components, "is able to". For example, the phrase "processor adapted (or configured) to perform A, B, and C" may mean a dedicated processor (e.g. embedded processor) only for performing the corresponding operations or a generic-purpose processor (e.g., central processing unit (CPU) or application processor (AP)) that can perform the corresponding operations by executing one or more software programs stored in a memory device.

An electronic device according to various embodiments of the present disclosure may include at least one of, for example, a smart phone, a tablet Personal Computer (PC), a mobile phone, a video phone, an electronic book reader (e-book reader), a desktop PC, a laptop PC, a netbook computer, a workstation, a server, a Personal Digital Assistant (PDA), a Portable Multimedia Player (PMP), a MPEG-1 audio layer-3 (MP3) player, a mobile medical device, a camera, and a wearable device. According to various embodiments, the wearable device may include at least one of an accessory type (e.g., a watch, a ring, a bracelet, an anklet, a necklace, a glasses, a contact lens, or a Head-Mounted Device (HMD)), a fabric or clothing integrated type (e.g., an electronic clothing), a body-mounted type (e.g., a skin pad, or tattoo), and a bio-implantable type (e.g., an implantable circuit). According to some embodiments, the electronic device may be a home appliance. The home appliance may include at least one of, for example, a television, a Digital Video Disk (DVD) player, an audio, a refrigerator, an air conditioner, a vacuum cleaner, an oven, a microwave oven, a washing machine, an air cleaner, a set-top box, a home automation control panel, a security control panel, a TV box (e.g., Samsung HomeSyncTM, Apple TVTM, or Google TVTM), a game console (e.g., XboxTM and PlayStationTM), an electronic dictionary, an electronic key, a camcorder, and an electronic photo frame.

According to another embodiment, the electronic device may include at least one of various medical devices (e.g., various portable medical measuring devices (a blood glucose monitoring device, a heart rate monitoring device, a blood pressure measuring device, a body temperature measuring device, etc.), a Magnetic Resonance Angiography (MRA), a Magnetic Resonance Imaging (MRI), a Computed Tomography (CT) machine, and an ultrasonic machine), a navigation device, a Global Positioning System (GPS) receiver, an Event Data Recorder (EDR), a Flight Data Recorder (FDR), a Vehicle Infotainment Devices, an electronic devices for a ship (e.g., a navigation device for a ship, and a gyro-compass), avionics, security devices, an automotive head unit, a robot for home or industry, an automatic teller's machine (ATM) in banks, point of sales (POS) in a shop, or internet device of things (e.g., a light bulb, various sensors, electric or gas meter, a sprinkler device, a fire alarm, a thermostat, a streetlamp, a toaster, a sporting goods, a hot water tank, a heater, a boiler, etc.). According to some embodiments, the electronic device may include at least one of a part of furniture or a building/structure, an electronic board, an electronic signature receiving device, a projector, and various kinds of measuring instruments (e.g., a water meter, an electric meter, a gas meter, and a radio wave meter). The electronic device according to various embodiments of the present disclosure may be a combination of one or more of the aforementioned various devices. The electronic device according to some embodiments of the present disclosure may be a flexible device. Further, the electronic device according to an embodiment of the present disclosure is not limited to the aforementioned devices, and may include a new electronic device according to the development of technology. Hereinafter, an electronic device according to various embodiments will be described with reference to the accompanying drawings. As used herein, the term "user" may indicate a person who uses an electronic device or a device (e.g., an artificial intelligence electronic device) that uses an electronic device.

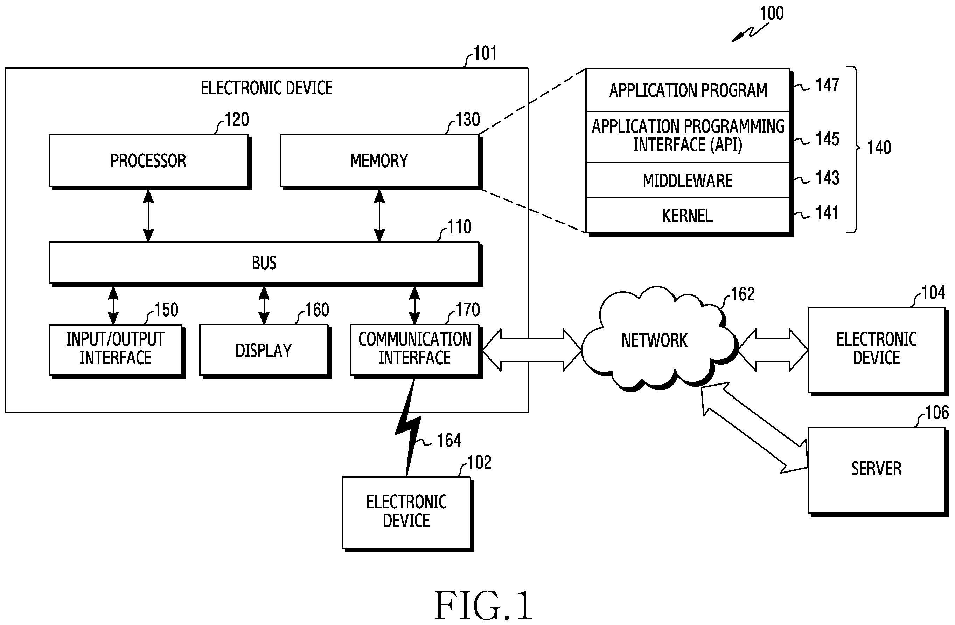

FIG. 1 illustrates a network environment including an electronic device according to various embodiments of the present disclosure.

Referring to FIG. 1, an electronic device 101 within a network environment 100, according to various embodiments, will be described with reference to FIG. 1. The electronic device 101 may include a bus 110, a processor 120, a memory 130, an input/output interface 150, a display 160, and a communication interface 170. In some embodiments, the electronic device 101 may omit at least one of the above elements or may further include other elements. The bus 110 may include, for example, a circuit for connecting the elements 110 -170 and transferring communication (e.g., control messages and/or data) between the elements. The processor 120 may include one or more of a Central Processing Unit (CPU), an Application Processor (AP), and a Communication Processor (CP). The processor 120, for example, may carry out operations or data processing relating to control and/or communication of at least one other element of the electronic device 101.

The memory 130 may include a volatile memory and/or a non-volatile memory. The memory 130 may store, for example, instructions or data relevant to at least one other element of the electronic device 101. According to an embodiment, the memory 130 may store software and/or a program 140. The program 140 may include, for example, a kernel 141, middleware 143, an Application Programming Interface (API) 145, and/or application programs (or "applications") 147. At least some of the kernel 141, the middleware 143, and the API 145 may be referred to as an Operating System (OS). The kernel 141 may control or manage system resources (e.g., the bus 110, the processor 120, or the memory 130) used for performing an operation or function implemented by the other programs (e.g., the middleware 143, the API 145, or the application programs 147). Furthermore, the kernel 141 may provide an interface through which the middleware 143, the API 145, or the application programs 147 may access the individual elements of the electronic device 101 to control or manage the system resources.

The middleware 143, for example, may function as an intermediary for allowing the API 145 or the application programs 147 to communicate with the kernel 141 to exchange data. In addition, the middleware 143 may process one or more operation requests received from the application program 147 according to priority. For example, the middleware 143 may give priority to use the system resources of the electronic device 101 (for example, the bus 110, the processor 120, the memory 130, and the like) to at least one of the application programs 147. For example, the middleware 143 may perform scheduling or load balancing with respect to the one or more operation requests by processing the one or more operation requests according to the priority given to the at least one application program. The API 145 is an interface through which the applications 147 control functions provided from the kernel 141 or the middleware 143, and may include, for example, at least one interface or function (e.g., instruction) for file control, window control, image processing, or text control. The input/output interface 150, for example, may function as an interface that may transfer instructions or data input from a user or another external device to the other element(s) of the electronic device 101. Furthermore, the input/output interface 150 may output the instructions or data received from the other element(s) of the electronic device 101 to the user or another external device.

The display 160 may include, for example, a Liquid Crystal Display (LCD), a Light Emitting Diode (LED) display, an Organic Light Emitting Diode (OLED) display, a Micro Electro Mechanical System (MEMS) display, or an electronic paper display. The display 160, for example, may display various types of content (e.g., text, images, videos, icons, or symbols) for the user. The display 160 may include a touch screen and receive, for example, a touch, gesture, proximity, or hovering input using an electronic pen or the user's body part. The communication interface 170, for example, may set communication between the electronic device 101 and an external device (e.g., the first external electronic device 102, the second external electronic device 104, or a server 106). For example, the communication interface 170 may be connected to a network 162 through wireless or wired communication to communicate with the external device (e.g., the second external electronic device 104 or the server 106).

The wireless communication may use at least one of, for example, Long Term Evolution (LTE), LTE-Advance (LTE-A), Code Division Multiple Access (CDMA), Wideband CDMA (WCDMA), Universal Mobile Telecommunications System (UMTS), WiBro (Wireless Broadband), and Global System for Mobile Communications (GSM), as a cellular communication protocol. In addition, the wireless communication may include, for example, short range communication 164. The short-range communication 164 may be performed by using at least one of, for example, Wi-Fi, Bluetooth, Bluetooth low energy (BLE), Near Field Communication (NFC), and Global Navigation Satellite System (GNSS). The GNSS may include at least one of, for example, a Global Positioning System (GPS), a Global Navigation Satellite System (Glonass), a Beidou Navigation Satellite System (hereinafter referred to as "Beidou"), and a European Global Satellite-based Navigation System (Galileo), according to a use area, a bandwidth, or the like. Hereinafter, in the present disclosure, the "GPS" may be interchangeably used with the "GNSS". The wired communication may include at least one of, for example, a Universal Serial Bus (USB), a High Definition Multimedia Interface (HDMI), Recommended Standard 232 (RS-232), and a Plain Old Telephone Service (POTS). The network 162 may include at least one of a communication network such as a computer network (e.g., a LAN or a WAN), the Internet, and a telephone network.

Each of the first and second external electronic apparatuses 102 and 104 may be of a type identical to or different from that of the electronic apparatus 101. According to an embodiment, the server 106 may include a group of one or more servers. According to various embodiments, all or some of the operations performed in the electronic device 101 may be performed in another electronic device or a plurality of electronic devices (e.g., the electronic devices 102 and104 or the server 106). According to an embodiment, when the electronic device 101 has to perform some functions or services automatically or in response to a request, the electronic device 101 may make a request for performing at least some functions relating thereto to another device (e.g., the electronic device 102 or 104 or the server 106) instead of performing the functions or services by itself or in addition. Another electronic apparatus may execute the requested functions or the additional functions, and may deliver a result of the execution to the electronic apparatus 101. The electronic device 101 may process the received result as it is or additionally to provide the requested functions or services. To achieve this, for example, cloud computing, distributed computing, or client-server computing technology may be used.

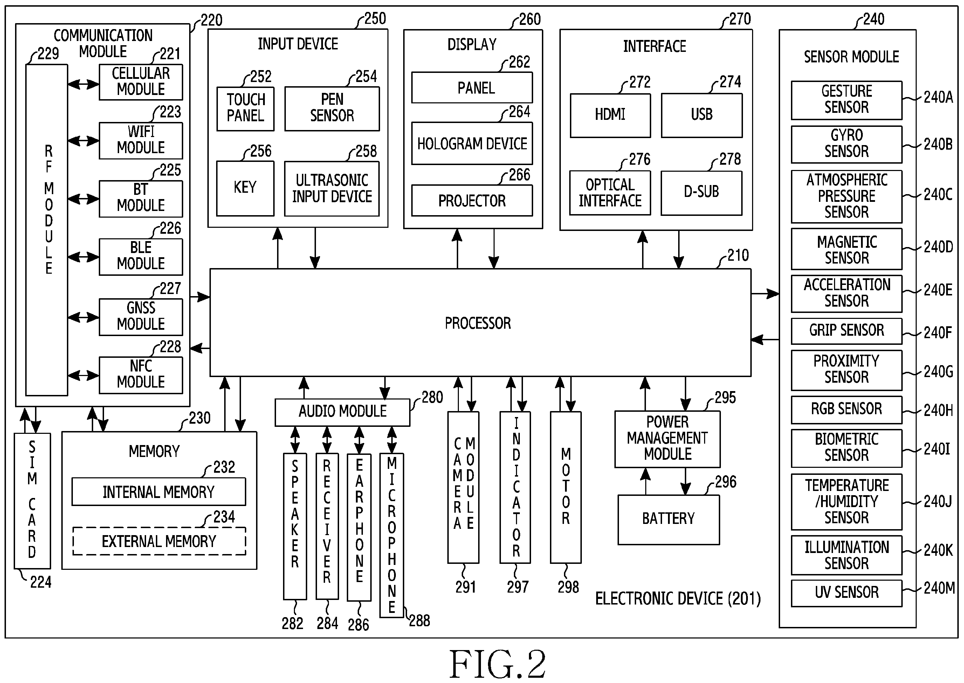

FIG. 2 is a block diagram illustrating an electronic device according to various embodiments of the present disclosure.

FIG. 2 is a block diagram of an electronic device 201 according to various embodiments. For example, the electronic apparatus 201 may include the whole or part of the electronic apparatus 101 illustrated in FIG. 1. The electronic device 201 may include at least one processor (e.g., Application Processor (AP)) 210, a communication module 220, a Subscriber Identification Module (SIM) 224, a memory 230, a sensor module 240, an input device 250, a display 260, an interface 270, an audio module 280, a camera module 291, a power management module 295, a battery 296, an indicator 297, and a motor 298. The processor 210 may control a plurality of hardware or software components connected to the processor 210 by driving an operating system or an application program and perform processing of various pieces of data and calculations. The processor 210 may be implemented by, for example, a System on Chip (SoC). According to an embodiment, the processor 210 may further include a Graphic Processing Unit (GPU) and/or an image signal processor. The processor 210 may include at least some (e.g., a cellular module 221) of the elements illustrated in FIG. 2. The processor 210 may load, into a volatile memory, instructions or data received from at least one (e.g., a non-volatile memory) of the other elements and may process the loaded instructions or data, and may store various data in a non-volatile memory.

The communication module 220 may have a configuration equal or similar to that of the communication interface 170 of FIG. 1. The communication module 220 may include, for example, the cellular module 221, a Wi-Fi module 223, a Bluetooth (BT) module 225, a Bluetooth low energy module 226, a GNSS module 227 (e.g., a GPS module, a Glonass module, a Beidou module, or a Galileo module), an NFC module 228, and a Radio Frequency (RF) module 229. The cellular module 221 may provide a voice call, image call, a text message service, or an Internet service through, for example, a communication network. According to an embodiment, the cellular module 221 may distinguish between and authenticate electronic devices 201 within a communication network using a subscriber identification module (for example, the SIM card 224). According to an embodiment of the present disclosure, the cellular module 221 may perform at least some of the functions that the processor 210 may provide. According to an embodiment, the cellular module 221 may include a Communication Processor (CP). Each of the Wi-Fi module 223, the BT module 225, the Bluetooth low energy module 226, the GNSS module 227, and the NFC module 228 may include, for example, a processor for processing data transmitted and received through the relevant module. According to some embodiments of the present disclosure, at least some (e.g., two or more) of the cellular module 221, the Wi-Fi module 223, the BT module 225, the GNSS module 227, and the NFC module 228 may be included in one Integrated Chip (IC) or IC package. The RF module 229 may transmit/receive, for example, a communication signal (for example, an RF signal). The RF module 229 may include, for example, a transceiver, a Power Amplifier Module (PAM), a frequency filter, a Low Noise Amplifier (LNA), and an antenna. According to another embodiment of the present disclosure, at least one of the cellular module 221, the Wi-Fi module 223, the BT module 225, the Bluetooth low energy module 226, the GNSS module 227, and the NFC module 228 may transmit and receive RF signals through a separate RF module. The subscriber identification module 224 may include, for example, a card including a subscriber identity module and/or an embedded SIM, and may contain unique identification information (e.g., an Integrated Circuit Card Identifier (ICCID)) or subscriber information (e.g., an International Mobile Subscriber Identity (IMSI)).

The memory 230 (for example, the memory 130) may include, for example, an internal memory 232 or an external memory 234. The embedded memory 232 may include at least one of a volatile memory (for example, a Dynamic Random Access Memory (DRAM), a Static RAM (SRAM), a Synchronous Dynamic RAM (SDRAM), and the like) and a non-volatile memory (for example, a One Time Programmable Read Only Memory (OTPROM), a Programmable ROM (PROM), an Erasable and Programmable ROM (EPROM), an Electrically Erasable and Programmable ROM (EEPROM), a mask ROM, a flash ROM, a flash memory (for example, a NAND flash memory or a NOR flash memory), a hard disc drive, a Solid State Drive (SSD), and the like). The external memory 234 may further include a flash drive, for example, a Compact Flash (CF), a Secure Digital (SD), a Micro Secure Digital (Micro-SD), a Mini Secure Digital (Mini-SD), an eXtreme Digital (xD), a memory stick, or the like. The external memory 234 may be functionally and/or physically connected to the electronic apparatus 201 through various interfaces.

The sensor module 240 may measure a physical quantity or detect an operation state of the electronic device 201, and may convert the measured or detected information into an electrical signal. For example, the sensor module 240 may include at least one of a gesture sensor 240A, a gyro sensor 240B, an atmospheric pressure sensor 240C, a magnetic sensor 240D, an acceleration sensor 240E, a grip sensor 240F, a proximity sensor 240G, a color sensor 240H (for example, a Red/Green/Blue (RGB) sensor), a bio-sensor 2401, a temperature/humidity sensor 240J, a light sensor 240K, and an Ultra Violet (UV) sensor 240M. Additionally or alternatively, the sensor module 240 may include, for example, an E-nose sensor, an electromyography (EMG) sensor, an electroencephalogram (EEG) sensor, an electrocardiogram (ECG) sensor, an Infrared (IR) sensor, an iris sensor, and/or a fingerprint sensor. The sensor module 240 may further include a control circuit for controlling one or more sensors included therein. In some embodiments of the present disclosure, the electronic apparatus 201 may further include a processor configured to control the sensor module 240 as a part of or separately from the processor 210, and may control the sensor module 240 while the processor 210 is in a sleep state.

The input device 250 may include, for example, a touch panel 252, a (digital) pen sensor 254, a key 256, or an ultrasonic input device 258. The touch panel 252 may use at least one of, for example, a capacitive type, a resistive type, an infrared type, and an ultrasonic type. Also, the touch panel 252 may further include a control circuit. The touch panel 252 may further include a tactile layer and provide a tactile reaction to the user. The (digital) pen sensor 254 may include, for example, a recognition sheet which is a part of the touch panel or is separated from the touch panel. The key 256 may include, for example, a physical button, an optical key or a keypad. The ultrasonic input device 258 may detect ultrasonic wavers generated by an input tool through a microphone (for example, a microphone 288) and identify data corresponding to the detected ultrasonic waves.

The display 260 (for example, the display 160) may include a panel 262, a hologram device 264 or a projector 266. The panel 262 may include a configuration that is identical or similar to the display 160 illustrated in FIG. 1. The panel 262 may be implemented to be, for example, flexible, transparent, or wearable. The panel 262 and the touch panel 252 may be implemented as one module. The hologram 264 may show a three dimensional image in the air by using an interference of light. The projector 266 may display an image by projecting light onto a screen. The screen may be located, for example, inside or outside the electronic apparatus 201. According to an embodiment, the display 260 may further include a control circuit for controlling the panel 262, the hologram device 264, or the projector 266. The interface 270 may include, for example, a High-Definition Multimedia Interface (HDMI) 272, a Universal Serial Bus (USB) 274, an optical interface 276, or a D-subminiature (D-sub) 278. The interface 270 may be included in, for example, the communication interface 170 illustrated in FIG. 1. Additionally or alternatively, the interface 270 may include, for example, a Mobile High-definition Link (MHL) interface, a Secure Digital (SD) card/Multi-Media Card (MMC) interface, or an Infrared Data Association (IrDA) standard interface.

The audio module 280 may bilaterally convert, for example, a sound and an electrical signal. At least some elements of the audio module 280 may be included in, for example, the input/output interface 145 illustrated in FIG. 1. The audio module 280 may process sound information which is input or output through, for example, a speaker 282, a receiver 284, earphones 286, the microphone 288 or the like. The camera module 291 is a device which may photograph a still image and a dynamic image. According to an embodiment, the camera module 291 may include one or more image sensors (for example, a front sensor or a back sensor), a lens, an Image Signal Processor (ISP) or a flash (for example, LED or xenon lamp). The power management module 295 may manage, for example, power of the electronic device 201. According to an embodiment, the power management module 295 may include a Power Management Integrated Circuit (PMIC), a charger Integrated Circuit (IC), or a battery or fuel gauge. The PMIC may use a wired and/or wireless charging method. Examples of the wireless charging method may include, for example, a magnetic resonance method, a magnetic induction method, an electromagnetic method, and the like. Additional circuits (e.g., a coil loop, a resonance circuit, a rectifier, etc.) for wireless charging may be further included. The battery gauge may measure, for example, a residual quantity of the battery 296, and a voltage, a current, or a temperature during the charging. The battery 296 may include, for example, a rechargeable battery or a solar battery.

The indicator 297 may display a particular state (e.g., a booting state, a message state, a charging state, or the like) of the electronic apparatus 201 or a part (e.g., the processor 210). The motor 298 may convert an electrical signal into mechanical vibration, and may generate vibration, a haptic effect, or the like. Although not illustrated, the electronic apparatus 201 may include a processing unit (e.g., a GPU) for supporting a mobile television (TV). The processing unit for supporting mobile TV may, for example, process media data according to a certain standard such as Digital Multimedia Broadcasting (DMB), Digital Video Broadcasting (DVB), or mediaFLO™. Each of the above-described component elements of hardware according to the present disclosure may be configured with one or more components, and the names of the corresponding component elements may vary based on the type of electronic device. The electronic device according to various embodiments of the present disclosure may include at least one of the aforementioned elements. Some elements may be omitted or other additional elements may be further included in the electronic device. Also, some of the hardware components according to various embodiments may be combined into one entity, which may perform functions identical to those of the relevant components before the combination.

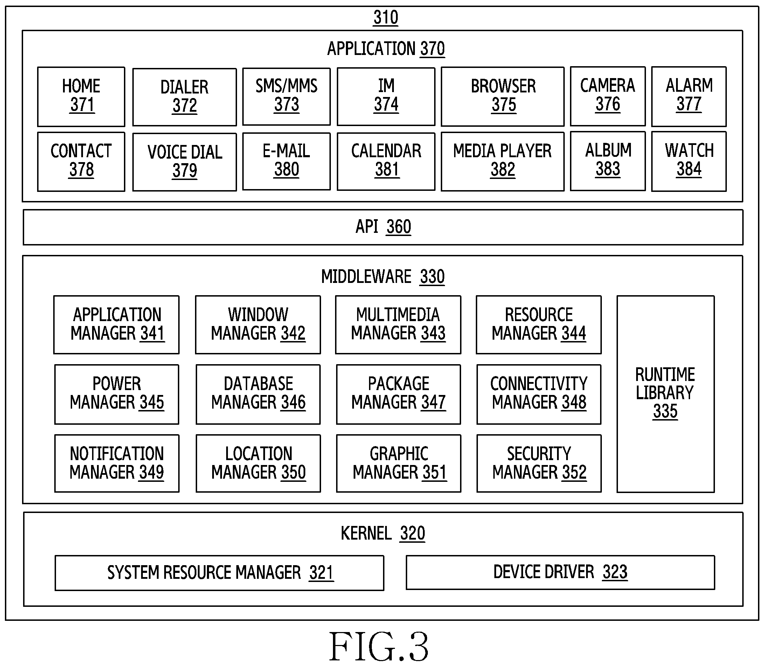

FIG. 3 is a block diagram of a program module according to various embodiments of the present disclosure.

According to an embodiment, the program module 310 (for example, the program 140) may include an Operating System (OS) for controlling resources related to the electronic device (for example, the electronic device 101) and/or various applications (for example, the application programs 147) executed in the operating system. The operating system may be, for example, Android, iOS, Windows, Symbian, Tizen, Bada, or the like. The program module 310 may include a kernel 320, middleware 330, an API 360, and/or an application 370. At least some of the program module 310 may be preloaded on the electronic apparatus, or may be downloaded from an external electronic apparatus (e.g., the electronic apparatus 102 or 104, or the server 106).

The kernel 320 (e.g., the kernel 141) may include, for example, a system resource manager 321 and/or a device driver 323. The system resource manager 321 may perform the control, allocation, retrieval, or the like of system resources. According to an embodiment of the present disclosure, the system resource manager 321 may include a process manager, a memory manager, a file system manager, or the like. The device driver 323 may include, for example, a display driver, a camera driver, a Bluetooth driver, a shared memory driver, a USB driver, a keypad driver, a Wi-Fi driver, an audio driver, or an Inter-Process Communication (IPC) driver. The middleware 330 may provide a function required by the applications 370 in common or provide various functions to the applications 370 through the API 360 so that the applications 370 can efficiently use limited system resources within the electronic device. According to an embodiment, the middleware 330 (for example, the middleware 143) may include, for example, at least one of a runtime library 335, an application manager 341, a window manager 342, a multimedia manager 343, a resource manager 344, a power manager 345, a database manager 346, a package manager 347, a connectivity manager 348, a notification manager 349, a location manager 350, a graphic manager 351, and a security manager 352.

The runtime library 335 may include a library module that a compiler uses in order to add a new function through a programming language while the applications 370 are being executed. The runtime library 335 may perform input/output management, memory management, the functionality for an arithmetic function, or the like. The application manager 341 may manage, for example, the life cycle of at least one of the applications 370. The window manager 342 may manage Graphical User Interface (GUI) resources used for the screen. The multimedia manager 343 may determine a format required to reproduce various media files, and may encode or decode a media file by using a coder/decoder (codec) appropriate for the relevant format. The resource manager 344 may manage resources, such as a source code, a memory, a storage space, and the like of at least one of the applications 370. The power manager 345 may operate together with a Basic Input/Output System (BIOS) to manage a battery or power and may provide power information required for the operation of the electronic device. The database manager 346 may generate, search for, and/or change a database to be used by at least one of the applications 370. The package manager 347 may manage the installation or update of an application distributed in the form of a package file.

The connectivity manager 348 may manage a wireless connection such as, for example, Wi-Fi or Bluetooth. The notification manager 349 may display or notify of an event, such as an arrival message, an appointment, a proximity notification, and the like, in such a manner as not to disturb the user. The location manager 350 may manage location information of the electronic apparatus. The graphic manager 351 may manage a graphic effect, which is to be provided to the user, or a user interface related to the graphic effect. The security manager 352 may provide various security functions required for system security, user authentication, and the like. According to an embodiment of the present disclosure, when the electronic apparatus (e.g., the electronic apparatus 101) has a telephone call function, the middleware 330 may further include a telephony manager for managing a voice call function or a video call function of the electronic apparatus. The middleware 330 may include a middleware module that forms a combination of various functions of the above-described elements. The middleware 330 may provide a module specialized for each type of OS in order to provide a differentiated function. Also, the middleware 330 may dynamically delete some of the existing elements, or may add new elements. The API 360 (e.g., the API 145) is, for example, a set of API programming functions, and may be provided with a different configuration according to an OS. For example, in the case of Android or iOS, one API set may be provided for each platform. In the case of Tizen, two or more API sets may be provided for each platform.

The applications 370 (for example, the application program 147) may include, for example, one or more applications which can provide functions such as home 371, dialer 372, SMS/MMS 373, Instant Message (IM) 374, browser 375, camera 376, alarm 377, contacts 378, voice dialer 379, email 380, calendar 381, media player 382, album 383, clock 384, health care (for example, measure exercise quantity or blood sugar), or environment information (for example, atmospheric pressure, humidity, or temperature information). According to an embodiment of the present disclosure, the applications 370 may include an application (hereinafter, referred to as an "information exchange application" for convenience of description) supporting information exchange between the electronic apparatus (e.g., the electronic apparatus 101) and an external electronic apparatus (e.g., the electronic apparatus 102 or 104). The application associated with information exchange may include, for example, a notification relay application for forwarding specific information to an external electronic device, or a device management application for managing an external electronic device. For example, the notification relay application may include a function of delivering, to the external electronic apparatus (e.g., the electronic apparatus 102 or 104), notification information generated by other applications (e.g., an SMS/MMS application, an email application, a health care application, an environmental information application, etc.) of the electronic apparatus 101. Further, the notification relay application may receive notification information from, for example, an external electronic device and provide the received notification information to a user. The device management application may manage (for example, install, delete, or update), for example, a function for at least a part of the external electronic device (for example, the electronic device 102 or 104) communicating with the electronic device (for example, turning on/off the external electronic device itself (or some elements thereof) or adjusting brightness (or resolution) of a display), applications executed in the external electronic device, or services provided from the external electronic device (for example, a telephone call service or a message service). According to an embodiment, the applications 370 may include applications (for example, a health care application of a mobile medical appliance or the like) designated according to attributes of the external electronic device 102 or 104. According to an embodiment of the present disclosure, the application 370 may include an application received from the external electronic apparatus (e.g., the server 106, or the electronic apparatus 102 or 104). According to an embodiment of the present disclosure, the application 370 may include a preloaded application or a third party application which can be downloaded from the server. Names of the elements of the program module 310, according to the above-described embodiments of the present disclosure, may change depending on the type of OS. According to various embodiments of the present disclosure, at least some of the program module 310 may be implemented in software, firmware, hardware, or a combination of two or more thereof. At least some of the program module 310 may be implemented (e.g., executed) by, for example, the processor (e.g., the processor 210). At least some of the program module 310 may include, for example, a module, a program, a routine, a set of instructions, and/or a process for performing one or more functions.

The term "module" as used herein may, for example, mean a unit including one of hardware, software, and firmware or a combination of two or more of them. The "module" may be interchangeably used with, for example, the term "unit", "logic", "logical block", "component", or "circuit". The "module" may be a minimum unit of an integrated component element or a part thereof. The "module' may be a minimum unit for performing one or more functions or a part thereof. The "module" may be mechanically or electronically implemented. For example, the "module" according to the present disclosure may include at least one of an Application-Specific Integrated Circuit (ASIC) chip, a Field-Programmable Gate Arrays (FPGA), and a programmable-logic device for performing operations which has been known or are to be developed hereinafter. The module or the program module, according to various embodiments, may: include one or more elements described above; exclude some of them; or further include other elements. The operations performed by the module, the program module, or other elements, according to various embodiments, may be executed in a sequential, parallel, iterative, or heuristic method. In addition, some operations may be executed in a different order, or may be omitted, or other operations may be added. In addition, the embodiments disclosed in the present document are intended for the explanation and understanding of the technical matter, and shall not limit the scope of the technology described in the present document. Accordingly, the scope of the present disclosure should be construed to encompass all modifications or various other embodiments based on the technical concept of the present disclosure. In addition, the embodiments disclosed in the present document are intended for the explanation and understanding of the disclosed technical matter, and shall not limit the scope of various embodiments of the present document. Therefore, the scope of various embodiments of the present document should be construed to encompass all modifications or various other embodiments based on the technical concept of the various embodiments of the present disclosure.

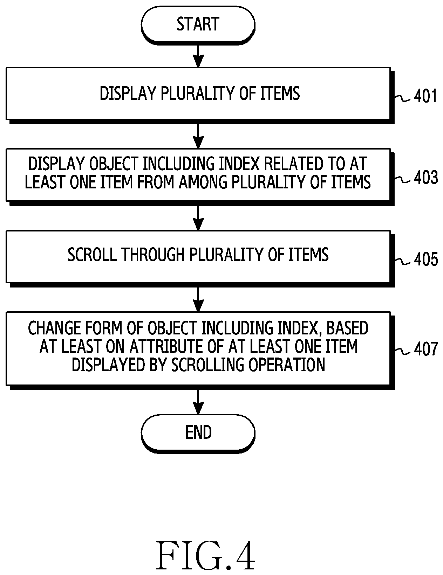

FIG. 4 is a flowchart illustrating a method of providing a user interface according to an embodiment of the present disclosure.

Referring to FIG. 4, in operation 401, the processor 120 may control the display 160 so as to display a plurality of items on a screen.

According to an embodiment, the processor 120 may control the display 160 so as to display the plurality of items by executing an application based at least on a user input. For example, the processor 120 may control the display 160 so as to display a plurality of contacts by executing a contacts application (or an address book or phonebook), a messenger application, or the like. As another example, the processor 120 may control the display 160 so as to display a file or a subfolder by executing (or opening) a folder including the subfolder or the file. However, the present disclosure is not limited thereto.

According to an embodiment, the processor 120 may control the display 160 so as to display the plurality of items in the form of a list. According to an embodiment, the processor 120 may control the display 160 so as arrange the plurality of items according to indices of the items and display the plurality of arranged items. For example, the processor 120 may arrange the plurality of items according to the order of indices of characters (e.g., letters (or text), numbers, symbols, and the like) (or names or appellations) indicating the items. For example, when a character indicating an item includes a plurality of letters, the processor 120 may designate, as an index, the first letter of the plurality of letters or the initial sound of the first letter, and may arrange the plurality of items according to the order of designated indices. As another example, when a character indicating an item includes a plurality of numbers (e.g., numbers indicating a date or a phone number), the processor 120 may designate, as an index, the first number of the plurality of numbers, and may arrange the plurality of items according to the order of designated indices (e.g., the order of numbers). The method of designating an index is not limited to the above-described examples. According to an embodiment, when indices of a plurality of items include a letter, a number, and a symbol (e.g., a special character), the processor 120 may classify the plurality of items according to whether corresponding indices are letters, numbers, and numbers, and may arrange the classified items for each group. According to an embodiment, a character indicating an item may be a name (or appellation) or a title associated with the item, or may be characters set by a user.

In operation 403, the processor 120 may control the display 160 so as to display an object (hereinafter referred to as a "first object") including an index related to at least one item from among the plurality of items displayed on the screen. According to an embodiment, the object may be referred to as an icon.

According to an embodiment, when a touch input is received on an area where the plurality of items is displayed, the processor 120 may control the display 160 so as to display the first object. For example, when a touch-down input on a point in the area where the plurality of items is displayed is maintained for at least a designated period of time, the processor 120 may control the display 160 so as to display the first object. As another example, when a drag input or flick input is received on a point in the area where the plurality of items is displayed, the processor 120 may control the display 160 so as to display the first object. According to an embodiment, when a touch input is received on the area where the plurality of items is displayed, the processor 120 may control the display 160 so as to display the first object in the form of a pop-up. For example, when a touch input is received on the area where the plurality of items is displayed, the processor 120 may control the display 160 so as to display the first object so as to superimpose (overlay) a layer displaying the first object over a layer displaying the plurality of items. However, the present disclosure is not limited thereto.

According to another embodiment, the processor 120 may control the display 160 so as to display the first object while displaying the plurality of items, without separate input. For example, when a contacts application is executed, the processor 120 may control the display 160 so as to display the first object, together with a plurality of contacts.

According to an embodiment, the processor 120 may control the display 160 so as to display the first object including an index of an item disposed on a designated location from among the plurality of items. For example, the processor 120 may control the display 160 so as to display the first object including an index of an item disposed in the center of the area where the plurality of items is displayed (or an index corresponding to the index of the item). However, the present disclosure is not limited thereto. For example, the processor 120 may control the display 160 so as to display the first object including an index that is the same as the index of an item disposed in an upper portion of the area where the plurality of items is displayed.

According to an embodiment, the processor 120 may control the display 160 so as to display the first object by reflecting the attribute of at least one item from among the plurality of items. For example, the processor 120 may control the display 160 so as to display the first object, the form of which is changed according to the attribute of the at least one item. For example, at least one of the size (or the area), the shape, the pattern, the color, and the like of the first object may be changed. As another example, the processor 120 may control the display 160 so as to display the first object, which includes an index of which the form is changed according to the attribute of at least one item. However, the present disclosure is not limited thereto. The method of displaying the first object by reflecting the attribute of at least one item will be described in detail with reference to operations 405 and 407.

In operation 405, the processor 120 may scroll through the plurality of items based at least on a user input. For example, the processor 120 may scroll through the plurality of items (or a plurality of items currently displayed on the screen) in a designated direction, based at least on a touch input, such as a drag input, a flick input, or the like, on the area where the plurality of items is displayed. In this instance, examples of the touch input include a drag input or a flick input, but the present disclosure is not limited thereto. As another example, the processor 120 may scroll through the plurality of items using, as a user input, at least one from among a key input, the movement of the electronic device 101, a user voice, a user gesture, and the like, in addition to a touch input.

According to an embodiment, the processor 120 may scroll through the plurality of items based on a user input on the area where the plurality of items is displayed. For example, when a user inputs a drag (or a flick) on the area where the plurality of items is displayed, the processor 120 may control the display 160 so as to display at least one item that is not displayed on the screen.

According to another embodiment, the processor 120 may scroll through the plurality of items based on a user input on the first object. For example, when a user moves the first object in a designated direction so as to scroll to an item in the state in which the user maintains a touch on the first object, the processor 120 may control the display 160 so as to display at least one item that has not been displayed on the screen.

According to an embodiment, when scrolling through the plurality of items using the first object, the processor 120 may scroll through the plurality of items at higher speed than in the case of scrolling through the area where the plurality of items is displayed. According to another embodiment, when scrolling through the plurality of items using the first object, the processor 120 may scroll through the plurality of items at a speed that is in proportion to the speed at which the first object is dragged. However, the present disclosure is not limited thereto.

In operation 407, the processor 120 may change the form of the first object including an index, based at least on the attribute of at least one item from among a plurality of items currently displayed on the screen by the scrolling operation.

According to an embodiment, the attribute of an item may include the number of items (or the amount of items) that have the same index. For example, the processor 120 may control the display 160 so as to change the form of the first object, based on the ratio of the number of items having an index corresponding to (or the same as) the index included in the first object to the number of items displayable by scrolling, including items that are not displayed on the screen.

According to another embodiment, when the item is a contact, the attribute of an item may include the attribute of a function set by a user in association with the contact. For example, when a favorites function, a contact-blocking function, or the like is set for a contact, the processor 120 may control the display 160 so as to change the form of the first object, based on the attribute of the function set for the contact having an index corresponding to the index included in the first object.

As another example, when an item is a contact, the attribute of the item may include the number of times that connection is made during a designated period of time (e.g., a week, a month, a year, or the like). For example, the processor 120 may control the display 160 so as to change the form of the first object, based on the number of times that connection is made, within a designated period of time, with a contact having an index corresponding to the index included in the first object.

As another example, when an item is a contact, the attribute of the item may include the most recent time at which connection was made. For example, the processor 120 may control the display 160 so as to change the form of the first object, based on the most recent time at which connection was made with a contact having an index corresponding to the index included in the first object.

According to another embodiment, the attribute of an item may include the group to which the item belongs. For example, when the item is a contact, the processor 120 may control the display 160 so as to change the form of the first object, based on the group to which the contact belongs, the contact having an index corresponding to the index included in the first object. As another example, when the item is a file (e.g., a picture file or a music file), the processor 120 may control the display 160 so as to change the form of the first object, based on the group that the file belongs to, the file having an index corresponding to the index included in the first object. According to an embodiment, when the attribute of an item includes the attribute of the group to which the item belongs, the index included in the first object may be an index of the name (or appellation) of the group.

According to another embodiment, when the item is a file or a folder, the attribute of the item may include the time at which the file or the folder is generated or modified. For example, the processor 120 may control the display 160 so as to change the form of the first object, based on the time at which a file or a folder is generated or modified, the file having an index corresponding to the index included in the first object. When the attribute of the item is the time at which a file or a folder is generated or modified, the index included in the first object may be an index associated with the time. For example, when the time at which the file or the folder is generated or modified is the 19th of December, the index included in the first object may be "19", which is provided in the form of a number. However, the present disclosure is not limited thereto.

According to another embodiment, when the item is a file or a folder, the attribute of the item may include the time at which the file or the folder is downloaded. For example, the processor 120 may control the display 160 so as to change the form of the first object, based on the time at which a file or a folder is downloaded, the file or folder having an index corresponding to the index included in the first object. When the attribute of the item is the time at which a file or a folder is downloaded, the index included in the first object may be an index associated with the time. For example, when the time at which the file or the folder is downloaded is 15:00, the index included in the first object may be "15", which is provided in the form of a number. However, the present disclosure is not limited thereto.

According to another embodiment, when the item is a file, the attribute of the item may include a file format (or file type). For example, the processor 120 may control the display 160 so as to change the form of the first object, based on a file format having an index corresponding to the index included in the first object. When the attribute of the item is a file format, the index included in the first object may be an index associated with the file format. For example, when the file format is "bmp", the index included in the first object may be "b", which is the first letter of the name of the file format. However, the present disclosure is not limited thereto.

According to an embodiment, the processor 120 may variously change the form of the first object, including an index, based at least on the attribute of at least one item from among a plurality of items currently displayed on the screen by a scrolling operation. For example, the processor 120 may change the form of the first object, for example, at least one of the size (or the area), the shape, the pattern, the color, and the like of the first object. However, the changed form of the object is not limited thereto.

According to an embodiment, in operation 407, the form of the index included in the first object may be changed based at least on the attribute of at least one item from among the plurality of items currently displayed on the screen by the scrolling operation. For example, the processor 120 may change the form of the index, for example, at least one of the size, the thickness, the shape, the font, the pattern, the color, and the like of the index. However, the changed form of the index included in the first object is not limited thereto.

According to an embodiment, the processor 120 may change the form of the first object, including an index, based at least on a plurality of attributes of at least one item from among the plurality of items currently displayed on the screen by a scrolling operation. For example, the size of the first object may be changed based on the number of items having the same index, and the color of the first object may be changed based on the attribute of a group to which an item belongs. However, the present disclosure is not limited thereto.

According to an embodiment, when an item displayed in an area used for displaying an item is changed by a scrolling operation, the processor 120 may perform control so as not to change the location at which the first object is displayed. For example, although a displayed item is changed by scrolling, the first object may be displayed in a fixed location without movement. However, the present disclosure is not limited thereto.

According to another embodiment, when an item displayed in an area used for displaying an item is changed by a scrolling operation, the processor 120 may change the location at which the first object is displayed. For example, the location at which the first object is displayed may be changed based at least on the degree of scrolling (or the length or the distance of scrolling) or the extent of dragging. However, the present disclosure is not limited thereto.

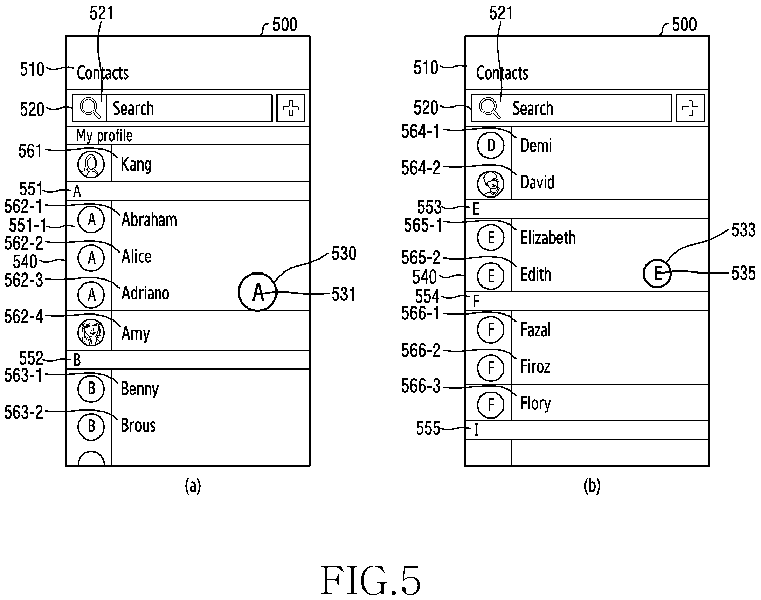

Hereinafter, a method of changing at least one of the form of the first object including an index and the form of the index included in the first object, based at least on the attribute of at least one item from among a plurality of items currently displayed on the screen by a scrolling operation, will be described in detail with reference to FIGs. 5 to 10.

FIG. 5 is a diagram illustrating a method of providing a user interface according to an embodiment of the present disclosure. For example, in FIG. 5, when an item is a contact, the size of an object including an index is changed by reflecting the attribute of the item, for example, the number of contacts.

Referring to FIG. 5, a screen 500 is a screen shown when a contacts application or a messenger application which displays a plurality of contacts is executed. However, the present disclosure is not limited thereto, and may include all applications that are capable of displaying a plurality of contacts, in addition to the contacts application or the messenger application.

According to an embodiment, FIGs. 5(a) and 5(b) illustrate screens, each screen displaying a plurality of items, for example, a plurality of contacts, and an object 530 and 533 (i.e., a first object) including an index 531 and 535 corresponding to at least one contact (or the name or appellation of at least one contact) from among the plurality of contacts.

According to an embodiment, the processor 120 may control the display 160 so as to show that the item is a contact (contacts)in an area 510 used for displaying the type of item. According to an embodiment, the processor 120 may display a search area 520 for searching for a contact that the user desires to search for, and when contact information is input into the search area, the processor 120 may control the display 160 so as to display a button 521 to execute searching. According to an embodiment, the processor 120 may control the display 160 so as to display the picture and the name of a user of the electronic device 101 in an area 561.When a touch input on the area 561 is received from the user, the processor 120 may control the display 160 so as to display a screen for displaying or modifying a profile including the contact information of the user.

According to an embodiment, the processor 120 may display at least one contact from among a plurality of contacts and an index of the at least one contact in an area 540 used for displaying the plurality of contacts (e.g., the names of persons corresponding to contacts or appellations corresponding to contacts). For example, the processor 120 may display at least one corresponding contact based on indices in areas 562-1 to 566-3 used for displaying individual contacts within the area in which the plurality of contacts is displayed. However, the present disclosure is not limited thereto. According to another embodiment, the processor 120 may control the display 160 so as to display an index of at least one contact in an area 551 to 555 and to display an index of at least one contact in the area 562-1 to 566-3 below the area 551 to 555. According to an embodiment, the areas 551 to 555 and the indices displayed in the areas 551 to 555 may be omitted. According to an embodiment, the area used for displaying the plurality of items may include an area 551-1 used for displaying the picture or the like of a person corresponding to a contact. According to another embodiment, when the picture of the person corresponding to the contact is not registered, the processor 120 may control the display 160 so as to display the index of the contact on the area 551-1. However, the present disclosure is not limited thereto.

According to an embodiment, the processor 120 may control the display 160 so as to display an object 530 and 533 (i.e., a first object) including an index by reflecting the attribute of the item, for example, the attribute of a contact.

For example, in comparison between FIG. 5(a) and FIG. 5(b), the number of contacts (i.e., the number of items or the amount of items) having the index "A" 531 included in the first object 530 is 4, which are displayed in the areas 562-1 to 562-4 in FIG. 5(a), and the number of contacts (i.e., the number of items) having an index "E" 535 included in the first object 533 is 2, which are displayed in the areas 565-1 to 565-2 in FIG. 5(b).

According to an embodiment, the processor 120 may control the display 160 such that the size of the first object 530 of FIG. 5(a) is displayed larger than the first object 533 of FIG. 5(b). According to an embodiment, when the size of the first object 530 of FIG. 5(a) is displayed larger than the first object 533 of FIG. 5(b), the processor 120 may control the display 160 such that the index 531 included in the first object 530 of FIG. 5(a) is displayed larger than the index 535 included in the first object 533 of FIG. 5(b). However, the present disclosure is not limited thereto. For example, although the size of the first object 530 of FIG. 5(a) is displayed larger than the first object 533 of FIG. 5(b), the processor 120 may control the display 160 so as to display the first object 530 and the first object 533 in a manner that displays the index 531 included in the first object 530 of FIG. 5(a) at a size that is the same as the size of the index 535 included in the first object 533 of FIG. 5(b).

According to an embodiment, as a scrolling operation scrolls from the screen of FIG. 5(a) to the screen of FIG. 5(b), the processor 120 may change the size of the first object, based on the number of at least one contact having an index that is the same as the index included in the first object. For example, the processor 120 may scroll contacts, based at least on a drag (or flick) provided on the first object 530 and 533 or the area 540 used for displaying items. As the contacts are scrolled, the processor 120 may change the size of the first object 530 and 533 based on the number of at least one contact having an index that is the same as the index included in the first object 530 and 533.

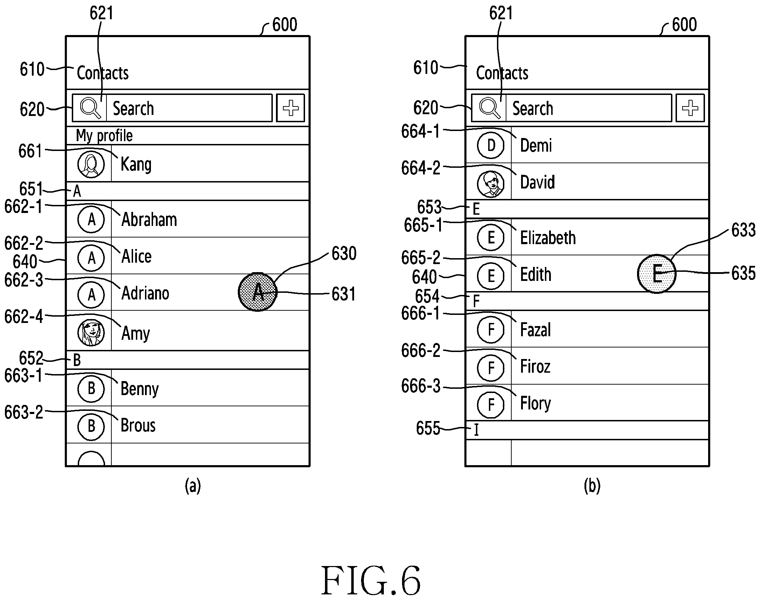

FIG. 6 is a diagram illustrating a method of providing a user interface according to another embodiment of the present disclosure. For example, in FIG. 6, when an item is a contact, the color of an object including an index is changed by reflecting the attribute of the item, for example, the number of contacts.

According to an embodiment, FIGs. 6(a) and 6(b) illustrate screens, each screen displaying a plurality of items, for example, a plurality of contacts, and an object 630 and 633 (i.e., a first object) including an index 631 and 635 corresponding to at least one contact (or the name or appellation of at least one contact) from among the plurality of contacts.

According to an embodiment, the processor 120 may control the display 160 so as to show that the item is a contact (contacts)in an area 610 used for displaying the type of item. According to an embodiment, the processor 120 may display a search area 620 for searching for a contact that the user desires to search for, and when contact information is input into the search area, the processor 120 may control the display 160 so as to display a button 621 to execute searching. According to an embodiment, the processor 120 may control the display 160 so as to display the picture and the name of the user of the electronic device 101 in an area 661.When a touch input on the area 661 is received from the user, the processor 120 may control the display 160 so as to display a screen for displaying or modifying a profile including the contact information of the user.

According to an embodiment, the processor 120 may display at least one contact from among a plurality of contacts and an index of the at least one contact in an area 640 used for displaying the plurality of contacts (e.g., the names or appellations corresponding to contacts). For example, the processor 120 may display at least one corresponding contact based on indices in areas 662-1 to 666-3 used for displaying individual contacts within the area in which the plurality of contacts is displayed. However, the present disclosure is not limited thereto. According to another embodiment, the processor 120 may control the display 160 so as to display an index of at least one contact in an area 651 to 655 and to display an index of at least one contact in the area 662-1 to 666-3 below the area 651 to 655. According to an embodiment, the areas 651 to 655 and the indices displayed in the areas 651 to 655 may be omitted.

According to an embodiment, the processor 120 may control the display 160 so as to display an object (i.e., a first object) including an index by reflecting the attribute of the item, for example, the attribute of a contact.

For example, in comparison between FIG. 6(a) and FIG. 6(b), the number of contacts (i.e., the number of items or the amount of items) having the index "A" 631 included in the first object 630 is 4, which are displayed in the areas 662-1 to 662-4 in FIG. 6(a), and the number of contacts (i.e., the number of items) having an index "E" 635 included in the first object 633 is 2, which are displayed in the areas 665-1 to 665-2 in FIG. 6(b).

According to an embodiment, the processor 120 may control the display 160 such that the color of the first object 630 of FIG. 6(a) is displayed bolder than the color of the first object 633 of FIG. 6(b). According to an embodiment, when the color of the first object 630 of FIG. 6(a) is displayed bolder than the color of the first object 633 of FIG. 6(b), the processor 120 may control the display 160 such that the color of the index 631 included in the first object 630 of FIG. 6(a) is displayed bolder than the color of the index 635 included in the first object 633 of FIG. 6(b). However, the present disclosure is not limited thereto.

According to an embodiment, as a scrolling operation scrolls from the screen of FIG. 6(a) to the screen of FIG. 6(b), the processor 120 may change the color of the first object 630 and 633 based on the number of at least one contact having an index that is the same as the index included in the first object 630 and 633. For example, the processor 120 may scroll contacts, based at least on a drag (or flick) provided on the first object 630 and 633 or the area 640 in which items are displayed. As the contacts are scrolled, the processor 120 may change the color of the first object 630 and 633 based on the number of at least one contact having an index that is the same as the index included in the first object 630 and 633.

According to an embodiment, although FIG. 6 illustrates an example in which the boldness of the color of the first object 630 and 633 is changed, the present disclosure is not limited thereto. For example, the processor 120 may control the display 160 so as to display the first object 630 and 633 by changing a color or to display the first object 630 and 633 by changing the shade of the color or the like based on the attribute of an item (e.g., the number of contacts). However, the present disclosure is not limited thereto.

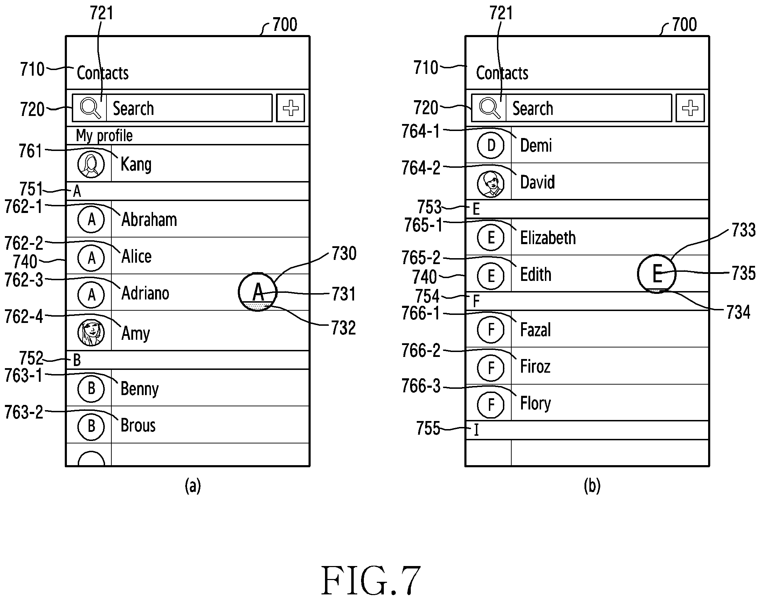

FIG. 7 is a diagram illustrating a method of providing a user interface according to another embodiment of the present disclosure. For example, in FIG. 7, when an item is a contact, the shape (or the pattern) of an object including an index is changed by reflecting the attribute of the item, for example, the number of contacts.

According to an embodiment, FIGs. 7(a) and 7(b) illustrate screens, each screen displaying a plurality of items, for example, a plurality of contacts, and an object 730 and 733 (i.e., a first object) including an index 731 and 735 corresponding to at least one contact (or the name or appellation of at least one contact) from among the plurality of contacts.

According to an embodiment, the processor 120 may control the display 160 so as to show that the item is a contact (contacts)in an area 710 used for displaying the type of item. According to an embodiment, the processor 120 may display a search area 720 for searching for a contact that the user desires to search for, and when contact information is input into the search area, the processor 120 may control the display 160 so as to display a button 721 to execute searching. According to an embodiment, the processor 120 may control the display 160 so as to display the picture and the name of the user of the electronic device 101 in an area 761.When a touch input on the area 761 is received from the user, the processor 120 may control the display 160 so as to display a screen for displaying or modifying a profile including the contact information of the user.

According to an embodiment, the processor 120 may display at least one contact from among a plurality of contacts and an index of the at least one contact in an area 740 used for displaying the plurality of contacts (e.g., the names or appellations corresponding to contacts). For example, the processor 120 may display at least one corresponding contact based on indices in areas 762-1 to 766-3 used for displaying individual contacts within the area in which the plurality of contacts is displayed. However, the present disclosure is not limited thereto. According to another embodiment, the processor 120 may control the display 160 so as to display an index of at least one contact in an area 751 to 755 and to display an index of at least one contact in the area 762-1 to 766-3 below the area 751 to 755. According to an embodiment, the areas 751 to 755 and the indices displayed in the areas 751 to 755 may be omitted.

According to an embodiment, the processor 120 may control the display 160 so as to display an object (i.e., a first object) including an index by reflecting the attribute of the item, for example, the attribute of a contact.

For example, in comparison between FIG. 7(a) and FIG. 7(b), the number of contacts (i.e., the number of items or the amount of items) having the index "A" 731 included in the first object 730 is 4, which are displayed in the areas 762-1 to 762-4 in FIG. 7(a), and the number of contacts (i.e., the number of items) having an index "E" 735 included in the first object 733 is 2, which are displayed in the areas 765-1 to 765-2 in FIG. 7(b).

According to an embodiment, the processor 120 may control the display 160 such that an area 732 filled with a designated color in the area of the first object 730 of FIG. 7(a) is displayed larger than an area 734 filled with a designated color in the area of the first object 733 of FIG. 7(b), by reflecting the number of contacts having indices that are the same as the index included in the object. For example, the processor may control the display 160 so as to display the colored area 732 and 734 differently based on the ratio of the number of contacts corresponding to the index 731 and 735 to the total number of contacts.

According to an embodiment, as a scrolling operation scrolls from the screen of FIG. 7(a) to the screen of FIG. 7(b), the processor 120 may change the shape of the first object 730 and 733 based on the number of at least one contact having an index that is the same as the index included in the first object 730 and 733. For example, the processor 120 may scroll contacts based at least on a drag (or flick) provided on the first object 730 and 733 or the area 740 used for displaying items. As the contacts are scrolled, the processor 120 may change the shape of the first object 730 and 733 based on the number of at least one contact having an index that is the same as the index included in the first object 730 and 733.

According to an embodiment, although FIG. 7 illustrates an example in which the size of the area filled with a designated color in the area of the first object 730 and 733 is changed, the present disclosure is not limited thereto. For example, the processor 120 may control the display 160 so as to display the first object 730 and 733 in a different shape based on the attribute of an item (e.g., the number of contacts).

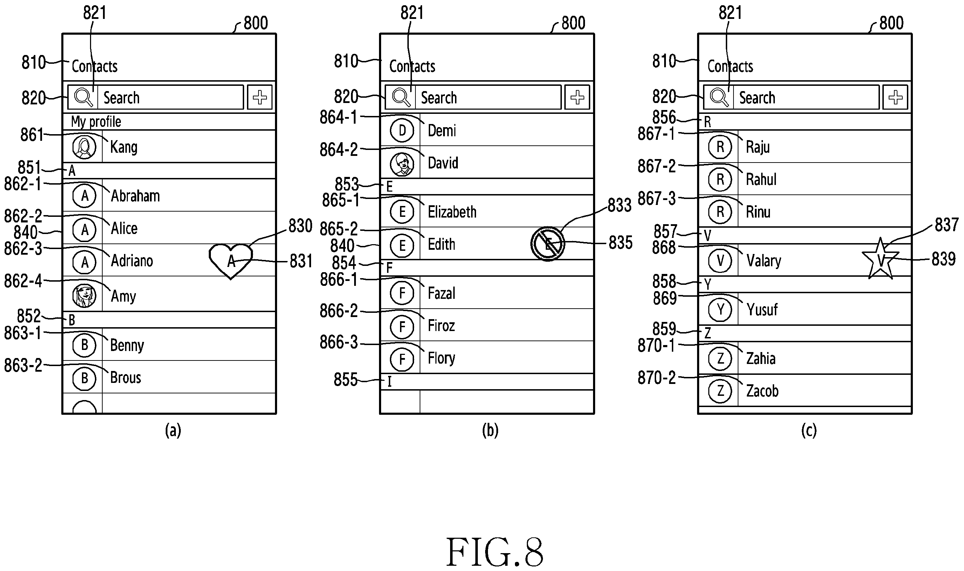

FIG. 8 is a diagram illustrating a method of providing a user interface according to another embodiment of the present disclosure. For example, in FIG. 8, when an item is a contact, the form of an object including an index is changed by reflecting the attribute of the item, for example, the attribute of a function set by a user in association with the contact.

According to an embodiment, FIGs. 8(a) to 8(c) illustrate screens, each screen displaying a plurality of items, for example, a plurality of contacts, and an object 830, 833, and 837 (i.e., a first object) including an index 831, 835, and 839 corresponding to at least one contact (or the name or appellation of at least one contact) from among the plurality of contacts.

According to an embodiment, the processor 120 may control the display 160 so as to show that the item is a contact (contacts)in an area 810 used for displaying the type of item. According to an embodiment, the processor 120 may display a search area 820 for searching for the contact that the user desires to search for, and when contact information is input into the search area, the processor 120 may control the display 160 so as to display a button 821 to execute searching. According to an embodiment, the processor 120 may control the display 160 so as to display the picture and the name of the user of the electronic device 101 in an area 861.When a touch input on the area 861 is received from the user, the processor 120 may control the display 160 so as to display a screen for displaying or modifying a profile including the contact information of the user.

According to an embodiment, the processor 120 may display at least one contact from among a plurality of contacts and an index of the at least one contact in an area 840 used for displaying the plurality of contacts (e.g., the names or appellations corresponding to contacts). For example, the processor 120 may display at least one corresponding contact based on indices in areas 862-1 to 870-2 used for displaying individual contacts within the area in which the plurality of contacts is displayed. However, the present disclosure is not limited thereto. According to another embodiment, the processor 120 may control the display 160 so as to display an index of at least one contact in an area 851 to 859 and to display an index of at least one contact in the area 862-1 to 870-2 below the area 851 to 859. According to an embodiment, the areas 851 to 859 and the indices displayed in the areas 851 to 859 may be omitted.

According to an embodiment, the processor 120 may control the display 160 so as to display an object (i.e., a first object) including an index by reflecting the attribute of the item, for example, the attribute of a contact.

For example, in comparison among FIGs. 8(a) to 8(c), when the contact "Adriano", corresponding to the index "A" 831 included in the first object 530 of FIG. 8(a), is set as a family (or a family group) of a user of the electronic device 101, the processor 120 may control the display 160 so as to display the first object 830 in the form of a heart. As another example, in FIG. 8(b), when a contact-blocking function is set for the contact "Edith", corresponding to the index "E" 835 included in the first object 833, the processor 120 may control the display 160 such that the first object 833 is displayed in a form including a diagonal line which normally indicates that the blocking function is set. In FIG. 8(c) when a favorites function is set for the contact "Valary", corresponding to an index "V" included in the first object 837, the processor 120 may control the display 160 such that the first object 837 is displayed in the form of a star. However, the changed form of the first object is not limited to the above-described examples.

According to an embodiment, as a scrolling operation scrolls from the screen of FIG. 8(a) to the screen of FIG. 8(b) or to the screen of FIG. 8(c), the processor 120 may change the form of the first object 830, 833, and 837 based on a function set by a user with respect to a contact having an index that is the same as the index included in the first object 830, 833, and 837. For example, the processor 120 may scroll through contacts, based at least on a drag (or flick) performed on the first object 830, 833, and 837 or the area 840 used for displaying items. While the contacts are scrolled, the processor 120 may change the form of the first object 830, 833, and 837 based on a function set by a user with respect to a contact having an index corresponding to the index included in the first object 830, 833, and 837.

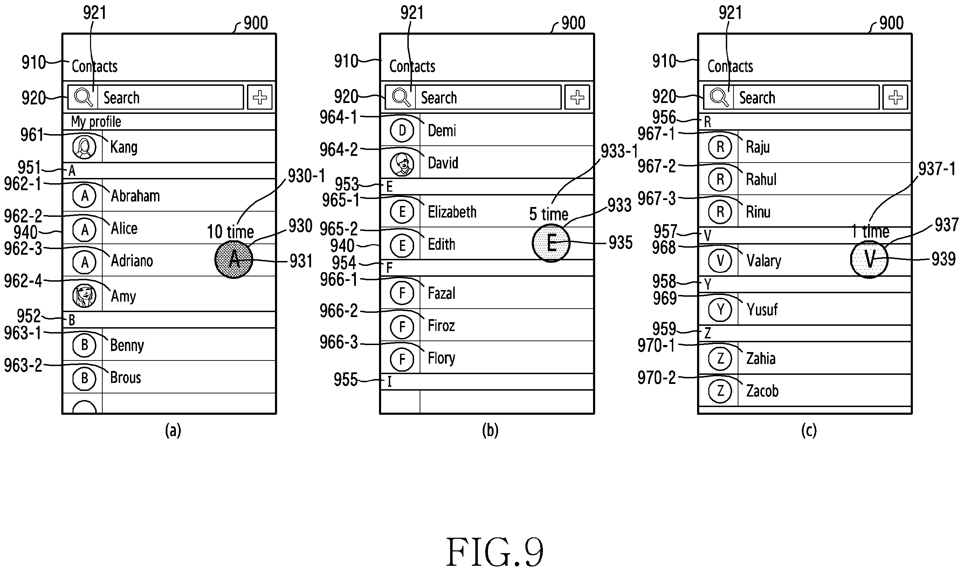

FIG. 9 is a diagram illustrating a method of providing a user interface according to another embodiment of the present disclosure. For example, in FIG. 9, when an item is a contact, the form of an object including an index is changed by reflecting the attribute of the item, for example, the number of times that connection is made within a designated period of time (e.g., a week, a month, a year, or the like).

According to an embodiment, FIGs. 9(a) to 9(c) illustrate screens, each screen displaying a plurality of items, for example, a plurality of contacts, and an object 930, 933, and 937 (i.e., a first object) including an index 931, 935, and 939 corresponding to at least one contact (or the name or appellation of at least one contact) from among the plurality of contacts.

According to an embodiment, the processor 120 may control the display 160 so as to show that the item is a contact (contacts)in an area 910 used for displaying the type of item. According to an embodiment, the processor 120 may display a search area 920 for searching for a contact that the user desires to search for, and when contact information is input into the search area, the processor 120 may control the display 160 so as to display a button 921 to execute searching. According to an embodiment, the processor 120 may control the display 160 so as to display the picture and the name of the user of the electronic device 101 in an area 961. When a touch input on the area 961 is received from the user, the processor 120 may control the display 160 so as to display a screen for displaying or modifying a profile including the contact information of the user.

According to an embodiment, the processor 120 may display at least one contact from among a plurality of contacts and an index of the at least one contact in an area 940 used for displaying the plurality of contacts (e.g., the names or appellations corresponding to contacts). For example, the processor 120 may display at least one corresponding contact based on indices in areas 962-1 to 970-2 used for displaying individual contacts within the area in which the plurality of contacts is displayed. However, the present disclosure is not limited thereto. According to another embodiment, the processor 120 may control the display 160 so as to display an index of at least one contact in an area 951 to 959 and to display an index of at least one contact in the area 962-1 to 970-2 below the area 951 to 959. According to an embodiment, the areas 951 to 959 and the indices displayed in the areas 951 to 959 may be omitted.

According to an embodiment, the processor 120 may control the display 160 so as to display an object (i.e., a first object) including an index by reflecting the attribute of the item, for example, the number of times that connection with a contact is made within a designated period of time.

For example, in comparison among FIGs. 9(a) to 9(c), when the number of times that the user of the electronic device 101 makes connection with the contact "Adriano" corresponding to the index "A" 931 included in the first object 930 of FIG. 9(a) in a month is 10, the processor 120 may control the display 160 so as to display the color of the first object 930 to be bolder than those of the objects 933 and 937 of FIGs. 9(b) and 9(c). As another example, in FIG. 9(b), when the number of times that the user of the electronic device 101 makes connection with the contact "Edith" corresponding to an index "E" 935 included in the first object 933 of FIG. 9(b) in a month is 5, the processor 120 may control the display 160 so as to display the color of the first object 933 to be lighter than the color of the objects 930 of FIG. 9(a) and to be bolder than that of the objects 937 of FIGs. 9(c). In FIG. 9(c), when the number of times that the user of the electronic device 101 makes connection with the contact "Valary" corresponding to the index "V" included in the first object 937 in a month is 1, the processor 120 may control the display 160 so as to display the color of the first object to be lighter than those of the object 933 of FIG. 9(b) and the object 937 of FIG. 9(c). However, the changed form of the first object is not limited to the above-described examples (e.g., the boldness of a color).

According to an embodiment, the processor 120 may control the display 160 so as to further display, around the first object 930, 933, and 937, an indication 930-1, 933-1, and 937-1 indicating the number of times that connection is made with a corresponding contact. For example, the processor 120 may control the display 160 so as to further display an indication 930-1, 933-1, and 937-1 indicating the number of times that the user of the electronic device 101 makes connection with a contact corresponding to the index 931, 935, and 939 included in the first object 930, 933, and 937, around the first object 930, 933, and 937 or in an area overlapping the first object 930, 933, and 937. However, the present disclosure is not limited thereto.

According to an embodiment, as a scrolling operation scrolls from the screen of FIG. 9(a) to the screen of FIG. 9(b) or to the screen of FIG. 9(c), the processor 120 may change the form of the first object 930, 933, and 937 based on a function set by a user with respect to a contact having an index that is the same as the index included in the first object 930, 933, and 937. For example, the processor 120 may scroll contacts based at least on a drag (or flick) provided on the first object or the area 940 used for displaying items. While the contacts are scrolled, the processor 120 may change the form of the first object 930, 933, and 937 based on the number of times that connection is made, within a designated period of time, with a contact having an index corresponding to the index included in the first object 930, 933, and 937.

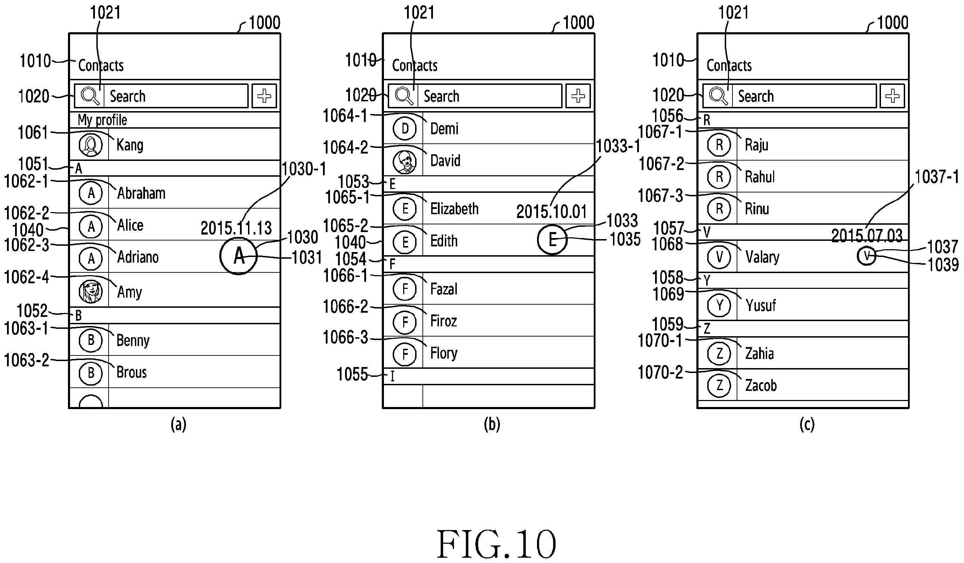

FIG. 10 is a diagram illustrating a method of providing a user interface according to another embodiment of the present disclosure. For example, in FIG. 10, when an item is a contact, the form of an object including an index is changed by reflecting the attribute of the item, for example, the most recent time at which the user of the electronic device 101 made connection with the contact.

According to an embodiment, FIGs. 10(a) to 10(c) illustrate screens, each screen displaying a plurality of items, for example, a plurality of contacts, and an object 1031, 1035, and 1039 (i.e., a first object) including an index 1030, 1033, and 1037 corresponding to at least one contact (or the name or appellation of at least one contact) from among the plurality of contacts.

According to an embodiment, the processor 120 may control the display 160 so as to show that the item is a contact (contacts) in an area 1010 used for displaying the type of item. According to an embodiment, the processor 120 may display a search area 1020 for searching for a contact that the user desires to search for, and when contact information is input into the search area, the processor 120 may control the display 160 so as to display a button 1021 to execute searching. According to an embodiment, the processor 120 may control the display 160 so as to display the picture and the name of the user of the electronic device 101 in an area 1061.When a touch input on the area 1061 is received from the user, the processor 120 may control the display 160 so as to display a screen for displaying or modifying a profile including the contact information of the user.

According to an embodiment, the processor 120 may display at least one contact from among a plurality of contacts and an index of the at least one contact in an area 1040 used for displaying the plurality of contacts (e.g., the names or appellations corresponding to contacts). For example, the processor 120 may display at least one corresponding contact based on indices in areas 1062-1 to 1070-2 used for displaying individual contacts within the area in which the plurality of contacts is displayed. However, the present disclosure is not limited thereto. According to another embodiment, the processor 120 may control the display 160 so as to display an index of at least one contact in an area 1051 to 1059 and to display an index of at least one contact in the area 1062-1 to 1070-2 below the area 1051 to 1059. According to an embodiment, the areas 1051 to 1059 and the indices displayed in the areas 1051 to 1059 may be omitted.

According to an embodiment, the processor 120 may control the display 160 so as to display an object (i.e., a first object) including an index by reflecting the attribute of the item, for example, the most recent time at which connection is made with a contact.

For example, in comparison among FIGs. 10(a) to 10(c), if the most recent time at which the user of the electronic device 101 made connection with the contact "Adriano" corresponding to the index "A" 1031 included in the first object 530 of FIG. 10(a) is November 13, 2015, the processor 120 may control the display 160 so as to display the first object 1030 at a size that is larger than those of FIGs. 10(b) and 10(c). As another example, in FIG. 10(b), if the most recent time at which the user of the electronic device 101 made connection with the contact "Edith" corresponding to the index "E" 1035 included in the first object 1033 of FIG. 10(b) is October 1, 2015, the processor 120 may control the display 160 so as to display the first object 1033 at a size that is smaller than that of the first object 1030 of FIG. 10(a) and is larger than that of the objects 1037 of FIGs. 10(c). In FIG. 10(c), if the most recent time at which the user of the electronic device 101 made connection with the contact "Valary" corresponding to the index "V" 1039 included in the first object 1037 of FIG. 10(c) is July 3, 2015, the processor 120 may control the display 160 so as to display the first object 1039 at a size that is larger than those of FIGs. 10(b) and 10(c). However, the changed form of the first object is not limited to the above-described examples (e.g., the size of an object).

According to an embodiment, the processor 120 may control the display 160 so as to further display an indication 1030-1, 1033-1, and 1037-1 indicating the most recent time at which connection with a corresponding contact is made around the first object 1030, 1033, and 1037. For example, the processor 120 may control the display 160 so as to further display an indication 1030-1, 1033-1, and 1037-1 indicating the most recent time at which the user of the electronic device 101 made connection with a contact corresponding to the index included in the first object 1030, 1033, and 1037, around the first object 1030, 1033, and 1037 or in an area overlapping the first object 1030, 1033, and 1037. However, the present disclosure is not limited thereto.

According to an embodiment, as a scrolling operation scrolls from the screen of FIG. 10(a) to the screen of FIG. 10(b) or to the screen of FIG. 10(c), the processor 120 may change the form of the first object 1030, 1033, and 1037 based on a function set by a user with respect to a contact having an index that is the same as the index included in the first object 1030, 1033, and 1037. For example, the processor 120 may scroll contacts, based at least on a drag (or flick) provided on the first object 1030, 1033, and 1037 or the area 1040 used for displaying items. While the contacts are scrolled, the processor 120 may change the form of the first object 1030, 1033, and 1037 based on the most recent time at which connection is made with a contact having an index corresponding to the index included in the first object 1030, 1033, and 1037.

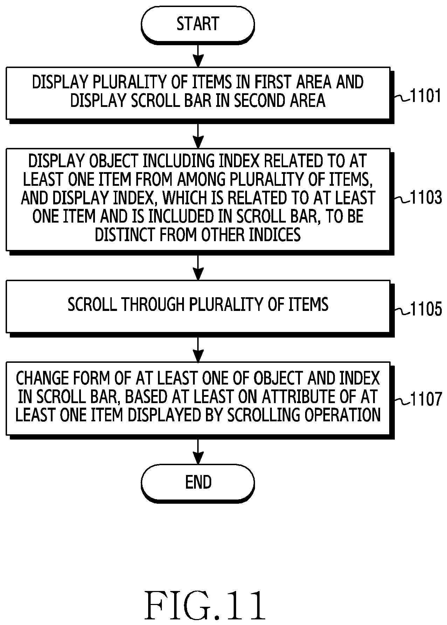

FIG. 11 is a flowchart illustrating a method of providing a user interface according to another embodiment of the present disclosure.

Referring to FIG. 11, in operation 1101, the processor 120 may control the display 160 so as to display a plurality of items in a first area of a screen, and to display, in a second area of the screen, a scroll bar including an index corresponding to at least one item from among the plurality of items.

According to an embodiment, the processor 120 may control the display 160 so as to display the plurality of items by executing an application based at least on a user input. For example, the processor 120 may control the display 160 so as to display a plurality of contacts by executing a contacts application (or an address book or phone book), a messenger application, or the like. As another example, the processor 120 may control the display 160 to display a file or a subfolder by executing (or opening) a folder including the file or the subfolder. However, the present disclosure is not limited thereto.

According to an embodiment, the processor 120 may control the display 160 so as to display the plurality of items in the form of a list. According to an embodiment, the processor 120 may control the display 160 so as arrange the plurality of items according to indices of the names (or appellations) of the items, and display the plurality of arranged items. For example, the processor 120 may arrange the plurality of items according to the order of indices of characters (e.g., letters (or text), numbers, symbols, and the like) indicating the items. For example, when a character indicating an item includes a plurality of letters, the processor 120 may designate, as an index, the first letter of the plurality of letters or the initial sound of the first letter, and may arrange the plurality of items according to the order of designated indices. As another example, when a character indicating an item includes a plurality of numbers (e.g., numbers indicating a date or a phone number), the processor 120 may designate, as an index, the first number of the plurality of numbers, and may arrange the plurality of items according to the order of designated indices (e.g., the order of numbers). The method of designating an index is not limited to the above-described examples. According to an embodiment, when indices of a plurality of items include a character, a number, and a symbol (e.g., a special character), the processor 120 may classify the plurality of items according to whether corresponding indices are characters, numbers, and numbers, and may arrange the classified items for each group. According to an embodiment, a character indicating an item may be a name (or appellation) or a title associated with the item, or may be a character set by a user in association with the item.

According to an embodiment, the processor 120 may control the display 160 so as to display the scroll bar including an index corresponding to at least a part of the plurality of items in the second area on one side of the screen. According to an embodiment, the processor 120 may control the display 160 so as to display the plurality of items and the scroll bar at the same time, when executing an application. As another example, in the state in which the plurality of items is displayed, as a user input (e.g., a touch input) is received, the processor 120 may control the display 160 so as to display the scroll bar in the form of a pop-up. However, the present disclosure is not limited thereto.

In operation 1103, the processor 120 may control the display 160 so as to display an object (hereinafter referred to as a "first object") that includes an index related to at least one item from among the plurality of items displayed on the screen, and to display an index which is related to the at least one item and is included in the scroll bar, in a manner that is distinct from other indices. According to an embodiment, the object may be an icon.

According to an embodiment, when a touch input is received on an area where the plurality of items is displayed, the processor 120 may control the display 160 so as to display the first object. For example, when a touch-down input on a point in the area where the plurality of items is displayed is maintained for at least a designated period of time, the processor 120 may control the display 160 so as to display the first object. As another example, when a drag input or a flick input is received on a point in the area where the plurality of items is displayed, the processor 120 may control the display 160 so as to display the first object. According to an embodiment, when a touch input is received on the area where the plurality of items is displayed, the processor 120 may control the display 160 so as to display the first object in the form of a pop-up. For example, when a touch input is received on the area where the plurality of items is displayed, the processor 120 may control the display 160 so as to display the first object in a manner that superimposes (overlays) a layer displaying the first object over a layer displaying the plurality of items. However, the present disclosure is not limited thereto.

According to another embodiment, the processor 120 may control the display 160 so as to display the first object while displaying the plurality of items, without separate input. For example, when a contacts application is executed, the processor 120 may control the display 160 so as to display the first object, together with a plurality of contacts.

According to an embodiment, the processor 120 may control the display 160 so as to display the first object including the index of an item that is disposed on a designated location from among the plurality of items. For example, the processor 120 may control the display 160 so as to display the first object including the index of an item that is disposed in the center of the area where the plurality of items is displayed (or an index corresponding to the index of the item). However, the present disclosure is not limited thereto. For example, the processor 120 may control the display 160 so as to display the first object including the index of an item that is disposed in an upper portion of the area where the plurality of items is displayed.

According to an embodiment, the processor 120 may control the display 160 so as to display an index, which is the same as the index included in the first object from among indices included in the scroll bar, so as to be distinct from other indices included in the scroll bar. For example, the processor 120 may control the display 160 such that an index, which is the same as the index included in the first object from among indices included in the scroll bar, is displayed in a different size, color, thickness, shape, or the like so as to be distinct from other indices included in the scroll bar. However, the present disclosure is not limited thereto.

According to an embodiment, the processor 120 may control the display 160 so as to display the first object by reflecting the attribute of at least one item displayed on the screen from among the plurality of items. For example, the processor 120 may control the display 160 so as to display the first object, the form of which is changed according to the attribute of the at least one item. For example, at least one of the size (or the area), the shape, the pattern, the color, and the like of the first object is changed. As another example, the processor 120 may control the display 160 so as to display the first object, which includes an index of which the form is changed according to the attribute of the at least one item. However, the present disclosure is not limited thereto.

According to another embodiment, the processor 120 may change the form of an index in the scroll bar by reflecting the attribute of at least one item displayed on the screen from among the plurality of items.

The method of displaying the first object and an index included in the scroll bar by reflecting the attribute of at least one item will be described in detail with reference to operations 1105 and 1107.

In operation 1105, the processor 120 may scroll through the plurality of items based at least on a user input. For example, the processor 120 may scroll through the plurality of items (or the plurality of items displayed on the current screen) in a designated direction, based at least on a touch input, such as a drag input, a flick input, or the like on the area where the plurality of items is displayed. In this instance, although examples of the touch input include a drag input or a flick input, the present disclosure is not limited thereto. As another example, the processor 120 may scroll through the plurality of items using, as a user input, at least one from among a key input, the movement of the electronic device 101, a user voice, a user gesture, and the like, in addition to a touch input.

According to an embodiment, the processor 120 may scroll through the plurality of items based on a user input on the area where the plurality of items is displayed. For example, when a user inputs a drag (or a flick) on the area where the plurality of items is displayed, the processor 120 may control the display 160 so as to display at least one item that has not been displayed on the screen.

According to another embodiment, the processor 120 may scroll through the plurality of items based on a user input on the first object. For example, when a user moves the first object in a designated direction so as to scroll to an item in the state in which the user maintains a touch on the first object, the processor 120 may control the display 160 so as to display at least one item that has not been displayed on the screen.

According to an embodiment, when scrolling through the plurality of items using the first object, the processor 120 may scroll through the plurality of items at higher speed than in the case of scrolling through the area where the plurality of items is displayed. According to another embodiment, when scrolling through the plurality of items using the first object, the processor 120 may scroll through the plurality of items at a speed that is in proportion to the speed at which the first object is dragged. However, the present disclosure is not limited thereto.

According to an embodiment, when a user input is received on an index included in the scroll bar, for example, when a touch input is received on an index included in the scroll bar, the processor 120 may control the display 160 so as to display at least one item corresponding to the index on which the touch input is received. For example, when a touch input is received on an index "D" included in the scroll bar, the processor 120 may control the display 160 so as to display at least one item including the index "D" from among the plurality of items on the screen. However, the present disclosure is not limited thereto.

In operation 1107, the processor 120 may change at least one of the form of the first object including an index and an index in the scroll bar, based at least on the attribute of at least one item from among a plurality of items currently displayed on the screen by a scrolling operation.

According to an embodiment, the attribute of an item may include the number of items (or the amount of items) that have the same index. For example, the processor 120 may control the display 160 so as to change at least one of the form of the first object and the index included in the scroll bar, based on the ratio of the number of items having an index corresponding to (or the same as) the index included in the first object to the number of items displayable by scrolling, including items that are not displayed on the screen.

According to another embodiment, the attribute of an item may include the attribute of a function set by a user with respect to a contact when the item is a contact. For example, when a favorites function, a contact-blocking function, or the like is set for a contact, the processor 120 may control the display 160 so as to change the form of the first object and the index included in the scroll bar, based on the attribute of the function set for the contact having an index corresponding to the index included in the first object.

As another example, when an item is a contact, the attribute of the item may include the number of times that connection has been made during a designated period of time (e.g., a week, a month, a year, or the like). For example, the processor 120 may control the display 160 so as to change at least one of the form of the first object and the index included in the scroll bar, based on the number of times that connection was made, within a designated period of time, with a contact having an index corresponding to the index included in the first object.

As another example, when an item is a contact, the attribute of the item may include the most recent time at which connection was made. For example, the processor 120 may control the display 160 so as to change at least one of the form of the first object and the index included in the scroll bar, based on the most recent time at which connection was made with a contact having an index corresponding to the index included in the first object.

According to another embodiment, the attribute of an item may include the group to which the item belongs. For example, when the item is a contact, the processor 120 may control the display 160 so as to change at least one of the form of the first object and the index included in the scroll bar, based on the group to which the contact belongs, the contact having an index corresponding to the index included in the first object. According to another embodiment, when the item is a file (e.g., a picture file or a music file), the processor 120 may control the display 160 so as to change at least one of the form of the first object and the index included in the scroll bar, based on a group to which the file belongs, the file having an index corresponding to the index included in the first object. According to an embodiment, when the attribute of an item include the attribute of the group to which the item belongs, the index included in the first object and the index included in the scroll bar may be the index of the name (or appellation) of the group.

According to another embodiment, when the item is a file or a folder, the attribute of the item may include the time at which the file or the folder was generated or modified. For example, the processor 120 may control the display 160 so as to change at least one of the form of the first object and the index included in the scroll bar, based on the time at which a file or folder was generated or modified, the file or folder having an index corresponding to the index included in the first object. When the attribute of the item is the time at which a file or a folder was generated or modified, the index included in the first object may be an index associated with the time. For example, when the time at which the file or the folder was generated or modified is the 19th of December, the index included in the first object may be "19", which is provided in the form of a number. However, the present disclosure is not limited thereto.

According to another embodiment, when the item is a file or a folder, the attribute of the item may include the time at which the file or the folder was downloaded. For example, the processor 120 may control the display 160 so as to change at least one of the form of the first object and the index included in the scroll bar, based on the time at which a file or folder was downloaded, the file or folder having an index corresponding to the index included in the first object. When the attribute of the item is the time at which a file or a folder was downloaded, the index included in the first object may be an index associated with the time. For example, when the time at which the file or the folder was downloaded is 15:00, the index included in the first object may be "15", which is provided in the form of a number. However, the present disclosure is not limited thereto.

According to another embodiment, when the item is a file, the attribute of the item may include a file format (or file type). For example, the processor 120 may control the display 160 so as to change at least one of the form of the first object and the index included in the scroll bar, based on a file format having an index corresponding to the index included in the first object. When the attribute of the item is a file format, the index included in the first object may be an index associated with the file format. For example, when the file format is "bmp", the index included in the first object may be "b", which is the first letter of the name of the file format. However, the present disclosure is not limited thereto.

According to an embodiment, the processor 120 may variously change at least one of the form of the first object including an index and an index included in the scroll bar, based at least on the attribute of at least one item from among a plurality of items currently displayed on the screen by a scrolling operation. For example, the processor 120 may change at least one of the form of the first object and the index included in the scroll bar, for example, at least one of the size (or area), the shape, the pattern, the color, and the like of the at least one of the first object and the index included in the scroll bar. However, the changed form of the object and index is not limited thereto.

According to an embodiment, in operation 1107, the form of the index included in the first object may be changed based at least on the attribute of at least one item from among the plurality of items currently displayed on the screen by a scrolling operation. For example, the processor 120 may change the form of the index, for example, at least one of the size, the thickness, the shape, the font, the pattern, the color, and the like of the index. However, the changed form of the index included in the first object is not limited thereto.

According to an embodiment, the processor 120 may change at least one of the form of the first object including an index and an index included in the scroll bar, based at least on a plurality of attributes of at least one item from among a plurality of items currently displayed on the screen by a scrolling operation. For example, the size of the first object may be changed based on the number of items having the same index, and the color of the index included in the scroll bar may be changed based on the attribute of the group to which the items belong. However, the present disclosure is not limited thereto.

According to an embodiment, when an item displayed in an area used for displaying an item is changed by a scrolling operation, the processor 120 may perform control so as not to change the location at which the first object is displayed. For example, although an item displayed is changed by scrolling, the first object may be displayed in a fixed location without movement. However, the present disclosure is not limited thereto.

According to another embodiment, when an item displayed in an area used for displaying an item is changed by a scrolling operation, the processor 120 may change the location at which the first object is displayed. For example, the location at which the first object is displayed may be moved based at least on the degree of scrolling (or the length or the distance of scrolling) or the extent of dragging. However, the present disclosure is not limited thereto.

According to another embodiment, when an item displayed in an area used for displaying an item is changed by a scrolling operation, the processor 120 may move the location of the first object such that the location of the first object corresponds to the location of an index included in the scroll bar. For example, when the item displayed in the area used for displaying an item is changed by a scrolling operation, the processor 120 may move the location of the first object such that the first object is displayed at a location next to (or to the left or right of) an index in the scroll bar. However, the present disclosure is not limited thereto.

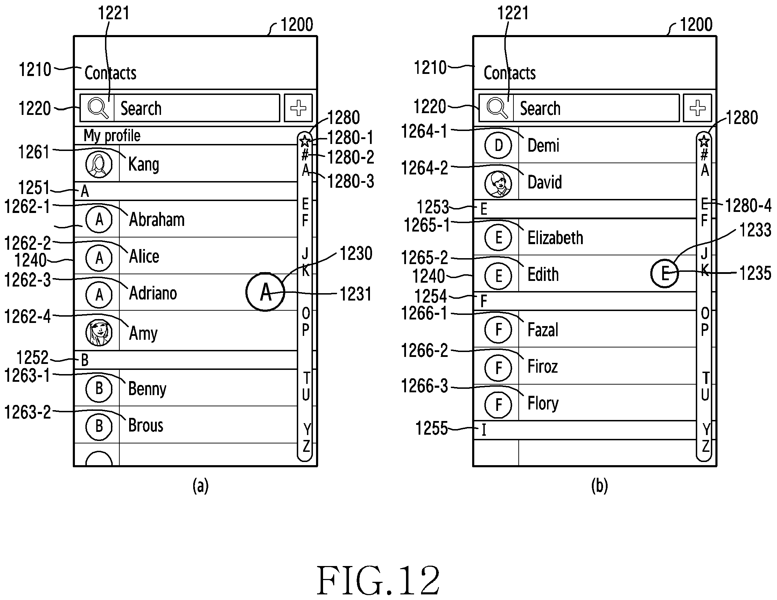

Hereinafter, a method of changing at least one of the form of a first object including an index, the form of an index included in the first object, and an index included in a scroll bar, based at least on the attribute of at least one item from among a plurality of items currently displayed on a screen by a scrolling operation will be described in detail with reference to FIGs. 12 to 13.

FIG. 12 is a diagram illustrating a method of providing a user interface according to an embodiment of the present disclosure. For example, in FIG. 12, when an item is a contact, at least one of the size of an object including an index and the form of an index included in a scroll bar is changed by reflecting the attribute of the item, for example, the number of contacts.

FIG. 12 shows a screen when a contacts application or a messenger application which display a plurality of contacts is executed. However, the present disclosure is not limited thereto, and all applications that are capable of displaying a plurality of contacts may be included, in addition to the contacts application or the messenger application.

According to an embodiment, FIGs. 12(a) and 12(b) illustrate screens, each screen displaying a plurality of items, for example, a plurality of contacts, an object 1230 and 1233 (i.e., a first object) including an index 1231 and 1235 corresponding to at least one contact (or the name or appellation of at least one contact) from among the plurality of contacts, and a scroll bar 1280 including a plurality of indices.

According to an embodiment, the processor 120 may control the display 160 so as to show that the item is a contact (contacts) in an area 1210 used for displaying the type of item. According to an embodiment, the processor 120 may display a search area 1220 for searching for a contact that the user desires to search for, and when contact information is input into the search area, the processor 120 may control the display 160 so as to display a button 1221 to execute searching. According to an embodiment, the processor 120 may control the display 160 so as to display the picture and the name of the user of the electronic device 101 in an area 1261.When a touch input on the area 1261 is received from the user, the processor 120 may control the display 160 so as to display a screen for displaying or modifying a profile including the contact information of the user.

According to an embodiment, the processor 120 may display at least one contact from among a plurality of contacts and an index of the at least one contact in an area 1240 used for displaying the plurality of contacts (e.g., the names or appellations corresponding to contacts). For example, the processor 120 may display at least one corresponding contact based on indices in areas 1262-1 to 1266-3 used for displaying individual contacts within the area in which the plurality of contacts is displayed. However, the present disclosure is not limited thereto. According to another embodiment, the processor 120 may control the display 160 so as to display an index of at least one contact in an area 1251 to 1255 and to display an index of at least one contact in the area 1262-1 to 1266-3 below the area 1251 to 1255. According to an embodiment, the areas 1251 to 1255 and the indices displayed in the areas 1251 to 1255 may be omitted.

According to an embodiment, the processor 120 may control the display 160 so as to display a scroll bar 1280 including a plurality of indices. For example, the processor 120 may control the display 160 so as to display the scroll bar 1280 including an index 1280-1 related to a favorites function, an index 1280-2 related to a symbol, and indices related to a plurality of items. According to an embodiment, in FIG. 12(a), an index "A" 1280-3 included in the scroll bar 1280 corresponds to at least one contact (Abraham, Alice, Adriano, and Amy) having the index "A", or corresponds to a contact (Adriano) displayed in the center of the area 1240 in which the plurality of contacts is displayed, and the thickness of "A" may be displayed to be thick so as to be distinct from other indices included in the scroll bar. However, the present disclosure is not limited thereto. According to an embodiment, in FIG. 12(b), an index "E" 1280-4 included in the scroll bar 1280 corresponds to at least one contact (Elizabeth and Edith) having the index "E" or corresponds to a contact (Edith) displayed in the center of the area 1240 in which the plurality of contacts is displayed, and the thickness of "E" may be displayed to be thick so as to be distinct from other indices included in the scroll bar. However, the present disclosure is not limited thereto.

According to an embodiment, the processor 120 may control the display 160 so as to display an object (i.e., a first object) including an index and an index in the scroll bar by reflecting the attribute of the item, for example, the attribute of a contact.

For example, in comparison between FIG. 12(a) and FIG. 12(b), the number of contacts (i.e., the number of items or the amount of items) having the index "A" 1231 included in the first object 1230 is 4, said contacts being displayed in the areas 1262-1 to 1262-4 in FIG. 12(a), and the number of contacts (i.e., the number of items) having the index "E" 1235 included in the first object 1233 is 2, said contacts being displayed in the areas 1265-1 to 1265-2 in FIG. 12(b).

According to an embodiment, the processor 120 may control the display 160 such that the first object 1230 of FIG. 12(a) is displayed at a size larger than that of the first object 1233 of FIG. 12(b). According to an embodiment, when the first object 1230 of FIG. 12(a) is displayed at a size larger than that of the first object 1233 of FIG. 12(b), the processor 120 may control the display 160 such that the index 1231 included in the first object 1230 of FIG. 12(a) is also displayed to be larger than the index 1233 included in the first object 12312 of FIG. 12(b). However, the present disclosure is not limited thereto. For example, although the first object 1230 of FIG. 12(a) is displayed at a size larger than that of the first object 1233 of FIG. 12(b), the processor 120 may control the display 160 so as to display the first object 1230 and the first object 533 in a manner that displays the index 1231 included in the first object 1230 of FIG. 12(a) at a size that is the same as the size of the index 1235 included in the first object 1233 of FIG. 12(b).

According to an embodiment, the processor 120 may control the display 160 such that the form of the index 1280-3 included in the scroll bar 1280 of FIG. 12(a), for example, at least one of the size, the thickness, the shape, the pattern, the color, and the like, is displayed to be different from the form of an index 1280-4 included in the scroll bar 1280 of FIG. 12(b). However, the present disclosure is not limited thereto.

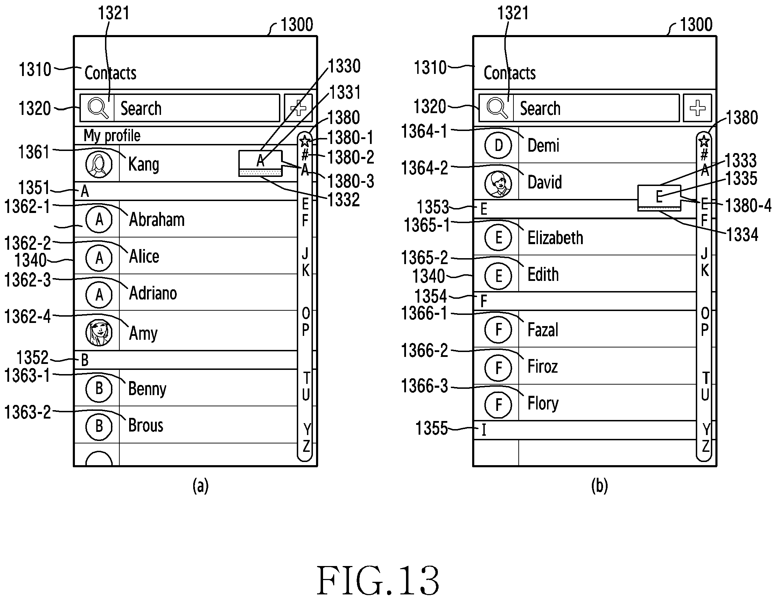

FIG. 13 is a diagram illustrating a method of providing a user interface according to another embodiment of the present disclosure. For example, in FIG. 13, when an item is a contact, at least one of the form of an object including an index and the form of an index included in a scroll bar 1380 is changed by reflecting the attribute of the item, for example, the number of contacts.

According to an embodiment, FIGs. 13(a) and 13(b) illustrate screens, each screen displaying a plurality of items, for example, a plurality of contacts, an object 1330 and 1333 (i.e., a first object) including an index 1331 and 1335 corresponding to at least one contact (or the name or appellation of at least one contact) from among the plurality of contacts, and the scroll bar 1380 including a plurality of indices.

According to an embodiment, the processor 120 may control the display 160 so as to show that the item is a contact (contacts) in an area 1310 used for displaying the type of item. According to an embodiment, the processor 120 may display a search area 1320 for searching for the contact that the user desires to search for, and when contact information is input into the search area, the processor 120 may control the display 160 so as to display a button 1321 to execute searching. According to an embodiment, the processor 120 may control the display 160 so as to display the picture and the name of a user of the electronic device 101 in an area 1361.When a touch input on the area 1361 is received from the user, the processor 120 may control the display 160 so as to display a screen for displaying or modifying a profile including the contact information of the user.

According to an embodiment, the processor 120 may display at least one contact from among a plurality of contacts and an index of the at least one contact in an area 1340 used for displaying the plurality of contacts (e.g., the names or appellations corresponding to contacts). For example, the processor 120 may display at least one corresponding contact based on indices in areas 1362-1 to 1366-3 used for displaying individual contacts within the area in which the plurality of contacts is displayed. However, the present disclosure is not limited thereto. According to another embodiment, the processor 120 may control the display 160 so as to display an index of at least one contact in an area 1351 to 1355 and to display an index of at least one contact in the area 1362-1 to 1366-3 below the area 1351 to 1355. According to an embodiment, the areas 1351 to 1355 and the indices displayed in the areas 1351 to 1355 may be omitted.

According to an embodiment, the processor 120 may control the display 160 so as to display the scroll bar 1380 including a plurality of indices. For example, the processor 120 may control the display 160 so as to display the scroll bar 1380 including an index 1380-1 related to a favorites function, an index 1380-2 related to a symbol, and indices related to a plurality of items. According to an embodiment, in FIG. 13(a), the index "A" 1331 included in the scroll bar corresponds to at least one contact (Abraham, Alice, Adriano, and Amy) having the index "A", or corresponds to a contact (Adriano) displayed in the center of the area 1340 in which the plurality of contacts is displayed, and the thickness of "A" may be displayed to be thick so as to be distinct from other indices included in the scroll bar. However, the present disclosure is not limited thereto. According to an embodiment, in FIG. 13(b), the index "E" 1335 included in the scroll bar 1380 corresponds to at least one contact (Elizabeth and Edith) having the index "E" or corresponds to a contact (Edith) displayed in the center of the area 1340 in which the plurality of contacts is displayed, and the thickness of "E" may be displayed to be thick so as to be distinct from other indices included in the scroll bar. However, the present disclosure is not limited thereto.

According to an embodiment, the processor 120 may control the display 160 so as to display an object (i.e., a first object) including an index and an index in the scroll bar by reflecting the attribute of the item, for example, the attribute of a contact.

For example, in comparison between FIG. 13(a) and FIG. 13(b), the number of contacts (i.e., the number of items or the amount of items) having the index "A" 1331 included in the first object 1330 is 4, which are displayed in the areas 1362-1 to 1362-4 in FIG. 13(a), and the number of contacts (i.e., the number of items) having the index "E" 1333 included in the first object 1333 is 2, which are displayed in the areas 1365-1 to 1365-2 in FIG. 13(b).

According to an embodiment, the processor 120 may control the display 160 such that an area 1332 filled with a designated color in the first object 1330 of FIG. 13(a) is displayed to be larger than an area 1334 filled with a designated color in the first object 1333 of FIG. 13(b). According to an embodiment, when the area 1332 filled with a designated color in the first object 1330 of FIG. 13(a) is displayed to be larger (or wider) than the area 1334 filled with a designated color in the first object 1333 of FIG. 13(b), the processor 120 may control the display 160 such that the index 1331 included in the first object 1330 of FIG. 13(a) is displayed to be larger than the index 1331 included in the first object 1330 of FIG. 13(b). However, the present disclosure is not limited thereto.

According to an embodiment, the processor 120 may control the display 160 such that the form of the index 1380-3 included in the scroll bar 1380 of FIG. 13(a), for example, at least one of the size, the thickness, the shape, the pattern, the color, and the like, is displayed to be different from the form of an index 1380-4 included in the scroll bar 1380 of FIG. 13(b). However, the present disclosure is not limited thereto.

According to an embodiment, as illustrated in FIG. 13, when an item displayed in an area used for displaying an item is changed by a scrolling operation, the processor 120 may move the location of the first object 1330 and 1333 such that the location of the first object 1330 and 1333 corresponds to the location of an index included in the scroll bar. For example, when the item displayed in the area used for displaying an item is changed by a scrolling operation, the processor 120 may move the location of the first object 1330 and 1333 such that the first object 1330 and 1333 is displayed in a location next to (or to the left or right of) an index in the scroll bar. However, the present disclosure is not limited thereto.

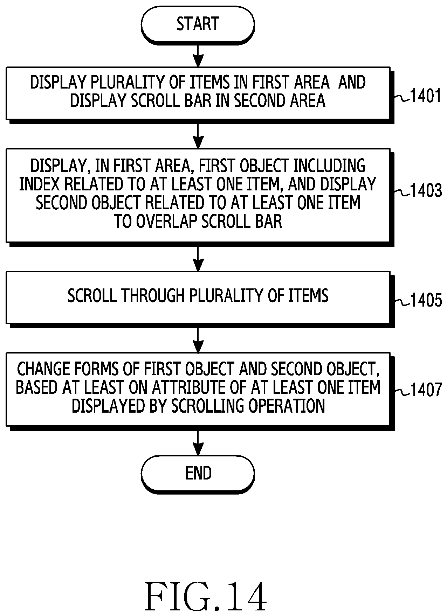

FIG. 14 is a diagram illustrating a method of providing a user interface according to another embodiment of the present disclosure.

Referring to FIG. 14, in operation 1401, the processor 120 may control the display 160 so as to display a plurality of items in a first area of a screen and to display a scroll bar including an index corresponding to at least one item from among the plurality of items in a second area of the screen.

According to an embodiment, the processor 120 may control the display 160 so as to display a plurality of items by executing an application based at least on a user input. For example, the processor 120 may control the display 160 so as to display a plurality of contacts by executing a contacts application (or an address book or phone book), a messenger application, or the like. As another example, the processor 120 may control the display 160 so as to display a file or a subfolder by executing (or opening) a folder including the file or the subfolder. However, the present disclosure is not limited thereto.

According to an embodiment, the processor 120 may control the display 160 so as to display a plurality of items in the form of a list. According to an embodiment, the processor 120 may control the display 160 so as arrange the plurality of items according to indices of the items and display the plurality of arranged items. For example, the processor 120 may arrange the plurality of items according to the order of indices of characters (e.g., letters (or text), numbers, symbols, and the like) indicating the items. For example, when a character indicating an item includes a plurality of letters, the processor 120 may designate, as an index, the first letter of the plurality of letters or the initial sound of the first letter, and may arrange the plurality of items according to the order of designated indices. As another example, when a character indicating an item includes a plurality of numbers (e.g., numbers indicating a date or a phone number), the processor 120 may designate, as an index, the first number of the plurality of numbers, and may arrange the plurality of items according to the order of designated indices (e.g., the order of numbers). The method of designating an index is not limited to the above-described examples. According to an embodiment, when indices of the plurality of items include a letter, a number, and a symbol (e.g., a special character), the processor 120 may classify the plurality of items according to whether corresponding indices are letters, numbers, and numbers, and may arrange the classified items for each group. According to an embodiment, a character indicating an item may be a name (or appellation) or a title associated with the item, or may be a character set by a user in association with the item.

According to an embodiment, the processor 120 may control the display 160 so as to display a scroll bar including an index corresponding to at least a part of the plurality of items in the second area in one side of the screen. According to an embodiment, the processor 120 may control the display 160 so as to display a plurality of items and the scroll bar at the same time, when executing an application. As another example, in the state in which the plurality of items is displayed, as a user input is received, the processor 120 may control the display 160 so as to display the scroll bar in the form of a pop-up. However, the present disclosure is not limited thereto.

In operation 1403, the processor 120 may control the display 160 so as to display an object (hereinafter referred to as a "first object") that includes an index related to at least one item from among the plurality of items displayed on a screen, to display an index included in the scroll bar, which is related to the at least one item, to be distinct from other indices, and to display an object (hereinafter referred to as a "second object") related to the at least one item so as to overlap the scroll bar. According to an embodiment, the object may be referred to as an icon.

According to an embodiment, when a touch input is received on an area where the plurality of items is displayed, the processor 120 may control the display 160 so as to display the first object and the second object. For example, when a touch-down input on a point in the area where the plurality of items is displayed is maintained for at least a designated period of time, the processor 120 may control the display 160 so as to display the first object and the second object. As another example, when a drag input or a flick input is received on a point in the area where the plurality of items is displayed, the processor 120 may control the display 160 so as to display the first object and the second object. According to an embodiment, when a touch input is received on the area where the plurality of items is displayed, the processor 120 may control the display 160 so as to display the first object and the second object in the form of a pop-up. For example, when a touch input is received on the area where the plurality of items is displayed, the processor 120 may control the display 160 so as to display the first object in a manner that superimposes (overlays) a layer displaying the first object over a layer displaying the plurality of items, and to display the second object in a manner that overlays a layer displaying the second object on an area where the scroll bar is displayed. However, the present disclosure is not limited thereto.

According to another embodiment, the processor 120 may control the display 160 so as to display the first object and the second object while displaying the plurality of items, without separate input. For example, when a contacts application is executed, the processor 120 may control the display 160 so as to display the first object and the second object together with a plurality of contacts.

According to an embodiment, the processor 120 may control the display 160 such that the first object and the second object are displayed, each including the index of an item disposed on a designated location from among the plurality of items. For example, the processor 120 may control the display 160 such that the first object and the second object are displayed, each including the index of an item disposed in the center of the area where the plurality of items is displayed (or an index corresponding to the index of the item). However, the present disclosure is not limited thereto. For example, the processor 120 may control the display 160 such that the first object and the second object are displayed, each including the index of an item disposed in an upper portion of the area where the plurality of items is displayed.

According to an embodiment, the processor 120 may control the display 160 so as to display an index, which is the same as the index included in the first object from among indices included in the scroll bar and the second object displayed to overlap the scroll bar, so as to be distinct from other indices included in the scroll bar. For example, the processor 120 may control the display 160 so as to display an index which is the same as the index included in the first object from among indices included in the scroll bar and the second object displayed to overlap the scroll bar, in a different size, color, thickness, shape, and the like so to be distinct from other indices included in the scroll bar. However, the present disclosure is not limited thereto.

According to an embodiment, the processor 120 may control the display 160 so as to display the scroll bar and the second object displayed to overlap the scroll bar by reflecting the attribute of at least one item from among the plurality of items displayed on the screen. For example, the processor 120 may control the display 160 so as to display the scroll bar and the second object displayed to overlap the scroll bar, the forms of which are changed according to the attribute of the at least one item. For example, at least one of the size (or the area), the shape, the pattern, the color, and the like of the scroll bar and the second object displayed to overlap the scroll bar may be changed. As another example, the processor 120 may control the display 160 so as to display the first object and the second object, which include indices of which the forms are changed according to the attribute of the at least one item. However, the present disclosure is not limited thereto.

According to another embodiment, the processor 120 may change the form of an index in the scroll bar by reflecting the attribute of at least one item displayed on the screen from among the plurality of items.

The method of displaying the first object, the second object, and an index included in the scroll bar by reflecting the attribute of at least one item will be described in detail with reference to operations 1405 and 1407.

In operation 1405, the processor 120 may scroll through the plurality of items based at least on a user input. For example, the processor 120 may scroll through the plurality of items (or the plurality of items currently displayed on a screen) in a designated direction, based at least on a touch input, such as a drag input, a flick input, or the like, on the area where the plurality of items is displayed. In this instance, examples of the touch input include a drag input or a flick input, but the present disclosure is not limited thereto. As another example, the processor 120 may scroll through the plurality of items using, as a user input, at least one from among a key input, the movement of the electronic device 101, a user voice, a user gesture, and the like, in addition to a touch input.

According to an embodiment, the processor 120 may scroll through the plurality of items based on a user input on the area where the plurality of items is displayed. For example, when a user inputs a drag (or a flick) on the area where the plurality of items is displayed, the processor 120 may control the display 160 so as to display at least one item that has not been displayed on the screen.

According to another embodiment, the processor 120 may scroll through the plurality of items based on user input on the first object. For example, when a user moves the first object in a designated direction so as to scroll to an item in the state in which the user maintains a touch on the first object, the processor 120 may control the display 160 so as to display at least one item that has not been displayed on the screen.

According to an embodiment, when scrolling through the plurality of items using the first object, the processor 120 may scroll through the plurality of items at higher speed than in the case of scrolling through the area where the plurality of items is displayed. According to another embodiment, when scrolling through the plurality of items using the first object, the processor 120 may scroll through the plurality of items at a speed that is in proportion to the speed at which the first object is dragged. However, the present disclosure is not limited thereto.

According to an embodiment, when a user input is received on an index included in the scroll bar or the second object, for example, when a touch input is received on the index included in the scroll bar or on the second object, the processor 120 may control the display 160 so as to display at least one item corresponding to the index on which the touch input is received. For example, when a touch input is received on an index "D" included in the scroll bar or the second object, the processor 120 may control the display 160 so as to display at least one item including the index "D" from among the plurality of items on the screen. However, the present disclosure is not limited thereto.

In operation 1407, the processor 120 may change at least one of the form of the first object including an index, the form of the second object, and an index in the scroll bar, based at least on the attribute of at least one item from among a plurality of items currently displayed on the screen by the scrolling operation.

According to an embodiment, the attribute of an item may include the number of items (or the amount of items) that has the same index. For example, the processor 120 may control the display 160 so as to change at least one of the form of the first object, the form of the second object, and the index included in the scroll bar, based on the ratio of the number of items having an index corresponding to (or the same as) the index included in the first object to the number of items displayable by scrolling, including items that are not displayed on the screen.

According to another embodiment, when an item is a contact, the attribute of the item may include the attribute of a function set by a user with respect to the contact. For example, when a favorites function, a contact-blocking function, or the like is set for a contact, the processor 120 may control the display 160 so as to change at least one of the form of the first object, the form of the second object, and the index included in the scroll bar, based on the attribute of the function set for the contact having an index corresponding to the index included in the first object.

As another example, when an item is a contact, the attribute of the item may include the number of times that connection has been made during a designated period of time (e.g., a week, a month, a year, or the like). For example, the processor 120 may control the display 160 so as to change at least one of the form of the first object, the form of the second object, and the index included in the scroll bar, based on the number of times that connection was made, within a designated period of time, with a contact having an index corresponding to the index included in the first object.

As another example, when an item is a contact, the attribute of the item may include the most recent time at which connection was made. For example, the processor 120 may control the display 160 so as to change at least one of the form of the first object, the form of the second object, and the index included in the scroll bar, based on the most recent time at which connection was made with a contact having an index corresponding to the index included in the first object.

According to another embodiment, the attribute of an item may include the group to which the item belongs. For example, when the item is a contact, the processor 120 may control the display 160 so as to change at least one of the form of the first object, the form of the second object, and the index included in the scroll bar, based on the group to which a contact belongs, the contact having an index corresponding to the index included in the first object. As another example, when the item is a file (e.g., a picture file or a music file), the processor 120 may control the display 160 so as to change at least one of the form of the first object, the form of the second object, and the index included in the scroll bar, based on the group to which the file belongs, the file having an index corresponding to the index included in the first object. According to an embodiment, when the attribute of the item includes the attribute of the group to which the item belongs, the index included in the first object and the index included in the scroll bar and the second object may be the index of the name (or appellation) of the group.

According to another embodiment, when the item is a file or a folder, the attribute of the item may include the time at which the file or the folder was generated or modified. For example, the processor 120 may control the display 160 so as to change at least one of the form of the first object, the form of the second object, and the index included in the scroll bar, based on the time at which a file or folder was generated or modified, the file or folder having an index corresponding to the index included in the first object. When the attribute of the item is the time at which a file or a folder was generated or modified, the index included in the first object may be an index associated with the time. For example, when the time at which the file or the folder was generated or modified is the 19th of December, the index included in the first object may be "19", which is provided in the form of a number. However, the present disclosure is not limited thereto.

According to another embodiment, when the item is a file or a folder, the attribute of the item may include the time at which the file or the folder was downloaded. For example, the processor 120 may control the display 160 so as to change at least one of the form of the first object, the form of the second object, and the index included in the scroll bar, based on the time at which a file or folder was downloaded, the file or folder having an index corresponding to the index included in the first object. When the attribute of the item is the time at which a file or a folder was downloaded, the index included in the first object may be an index associated with the time. For example, when the time at which the file or the folder was downloaded is 15:00, the index included in the first object may be "15," which is provided in the form of a number. However, the present disclosure is not limited thereto.

According to another embodiment, when the item is a file, the attribute of the item may include a file format (or file type). For example, the processor 120 may control the display 160 so as to change at least one of the form of the first object, the form of the second object, and the index included in the scroll bar, based on a file format having an index corresponding to the index included in the first object. When the attribute of the item is a file format of the item, the index included in the first object may be an index associated with the file format. For example, when the file format is "bmp", the index included in the first object may be "b", which is the first character of the name of the file format. However, the present disclosure is not limited thereto.

According to an embodiment, the processor 120 may variously change at least one of the form of the first object including an index, the form of the second object, and an index included in the scroll bar, based at least on the attribute of at least one item from among a plurality of items currently displayed on the screen by a scrolling operation. For example, the processor 120 may change at least one of the form of the first object, the form of the second object, and the index included in the scroll bar, for example, at least one of the size (or area), the shape, the pattern, the color, and the like of the at least one of the first object, the form of the second object, and the index included in the scroll bar. However, the changed form of the object and index is not limited thereto.

According to an embodiment, in operation 1407, the forms of the indices included in the first object and the second object may be changed based at least on the attribute of at least one item from among the plurality of items currently displayed on the screen by the scrolling operation. For example, the processor 120 may change the form of the index, for example, at least one of the size, the thickness, the shape, the font, the pattern, the color, and the like of the index. However, the changed forms of the indices included in the first object and the second object are not limited thereto.

According to an embodiment, the processor 120 may change at least one of the form of the first object including an index, the form of the second object, and an index included in the scroll bar, based at least on a plurality of attributes of at least one item from among a plurality of items currently displayed on the screen by a scrolling operation. For example, the size of the first object may be changed based on the number of items having the same index, the shape of the second object may be changed based on the file format of an item, and the color of the index included in the scroll bar may be changed based on the attribute of the group to which the item belongs. However, the present disclosure is not limited thereto.

According to an embodiment, when an item displayed in an area used for displaying an item is changed by a scrolling operation, the processor 120 may perform control so as not to change the location at which the first object is displayed. For example, although the item that is being displayed is changed by scrolling, the first object may be displayed in a fixed location without moving. However, the present disclosure is not limited thereto.

According to another embodiment, when an item displayed in an area used for displaying an item is changed by a scrolling operation, the processor 120 may change the locations of the first object and the second object. For example, the locations where the first object and the second object are displayed may be moved based at least on the degree of scrolling (or the length or the distance of scrolling) or the extent of dragging. However, the present disclosure is not limited thereto.

According to another embodiment, when an item displayed in an area used for displaying an item is changed by a scrolling operation, the processor 120 may move the locations of the first object and the object such that the locations of the first object and the object correspond to the location of an index included in the scroll bar. For example, when the item displayed in the area used for displaying an item is changed by a scrolling operation, the processor 120 may move the locations of the first object and the object such that the first object and the object are displayed in the locations next to (or to the left or right of) an index in the scroll bar. However, the present disclosure is not limited thereto.

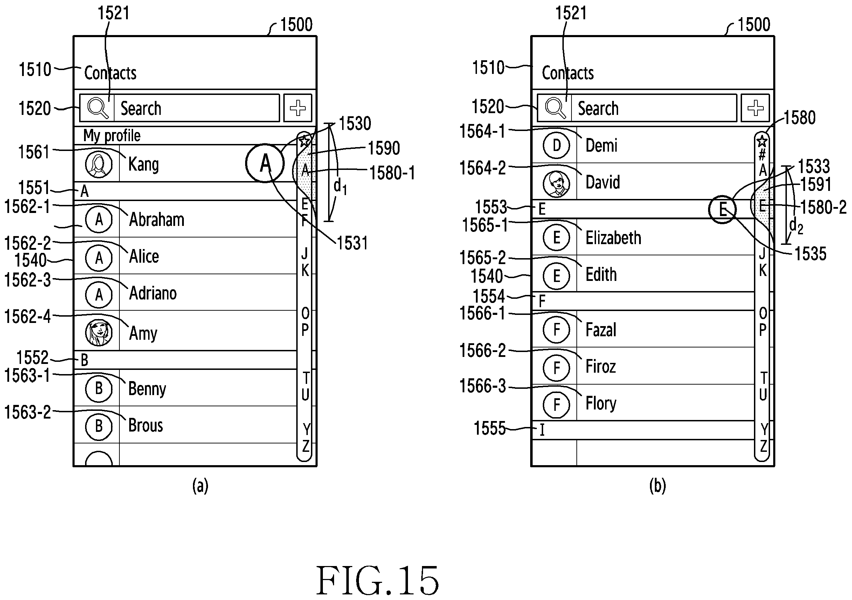

Hereinafter, a method of changing at least one of the form of a first object including an index, the form of the index included in the first object, the form of a second object, and an index included in a scroll bar, based at least on the attribute of at least one item from among a plurality of items currently displayed on a screen by a scrolling operation, will be described in detail with reference to FIGs. 15 to 16.

FIG. 15 is a diagram illustrating a method of providing a user interface according to an embodiment of the present disclosure. For example, in FIG. 15, when an item is a contact, at least one of the form of a first object including an index, the form of a second object, and the form of an index included in a scroll bar is changed by reflecting the attribute of the item, for example, the number of contacts.

According to an embodiment, FIGs. 15(a) and 15(b) illustrate screens, each screen displaying a plurality of items, for example, a plurality of contacts, an object 1530 and 1533 (i.e., a first object) including an index 1531 and 1535 corresponding to at least one contact (or the name or appellation of at least one contact) from among the plurality of contacts, a second object 1590 and 1591, and a scroll bar 1580 including a plurality of indices.

According to an embodiment, the processor 120 may control the display 160 so as to show that the item is a contact in an area 1510 used for displaying the type of item. According to an embodiment, when contact information is input into a search area, the processor 120 may display a search area 1520 for searching for the contact that the user desires to search for, and may control the display 160 so as to display a button 1521 to execute searching. According to an embodiment, the processor 120 may control the display 160 so as to display the picture and the name of a user of the electronic device 101 in an area 1561.When a touch input on the area 1561 is received from the user, the processor 120 may control the display 160 so as to display a screen for displaying or modifying a profile including the contact information of the user.

According to an embodiment, the processor 120 may display at least one contact from among a plurality of contacts and an index of the at least one contact in an area 1540 used for displaying the plurality of contacts (e.g., the names or appellations corresponding to contacts). For example, the processor 120 may display at least one corresponding contact based on indices in areas 1562-1 to 1566-3 used for displaying individual contacts within the area in which the plurality of contacts is displayed. However, the present disclosure is not limited thereto. According to another embodiment, the processor 120 may control the display 160 so as to display an index of at least one contact in an area 1551 to 1555 and to display an index of at least one contact in the area 1562-1 to 1566-3 below the area 1551 to 1555. According to an embodiment, the areas 1551 to 1555 and the indices displayed in the areas 1551 to 1555 may be omitted.

According to an embodiment, the processor 120 may control the display 160 so as to display the scroll bar 1580 including the plurality of indices. According to an embodiment, in FIG. 15(a), the index "A" 1580-1 included in the scroll bar 1580 corresponds to at least one contact (Abraham, Alice, Adriano, Amy) having the index "A", or corresponds to the contact (Adriano) displayed in the center of the area 1540 in which the plurality of contacts is displayed, and the thickness of "A" may be displayed to be thick so as to be distinct from other indices included in the scroll bar. However, the present disclosure is not limited thereto. According to an embodiment, in FIG. 15(b), the index "E" 1580-2 included in the scroll bar 1580 corresponds to at least one contact (Elizabeth and Edith) having the index "E", or corresponds to a contact (Edith) displayed in the center of the area 1540 in which the plurality of contacts is displayed, and the thickness of "E" may be displayed to be thick so as to be distinct from other indices included in the scroll bar. However, the present disclosure is not limited thereto.

According to an embodiment, the processor 120 may control the display 160 so as to display the second object 1590 and 1591 so as to overlap the scroll bar 1580. For example, the processor 120 may control the display 160 so as to display the second object 1590 and 1591, which overlappingly includes an index which is included in the scroll bar 1580 and corresponds to the item.

According to an embodiment, the processor 120 may control the display 160 so as to display the first object 1530 and 1531, the second object 1590 and 1591, and the index in the scroll bar 1580 by reflecting the attribute of the item, for example, the attribute of a contact.

For example, in comparison between FIG. 15(a) and FIG. 15(b), the number of contacts (i.e., the number of items or the amount of items) having the index "A" included in the first object 1530 is 4, which are displayed in the areas 1562-1 to 1562-4 in FIG. 15(a), and the number of contacts (i.e., the number of items) having the index "E" included in the first object 1533 is 2, which are displayed in the areas 1565-1 to 1565-2 in FIG. 15(b).

According to an embodiment, the processor 120 may control the display 160 such that the first object 1530 of FIG. 15(a) is displayed at a size larger than that of the first object 1533 of FIG. 15(b). According to an embodiment, when the first object 1530 of FIG. 15(a) is displayed to be larger than the first object 1533 of FIG. 15(b), the processor 120 may control the display 160 such that the index 1531 included in the first object 1530 of FIG. 15(a) is also displayed to be larger than the index 1535 included in the first object 1533 of FIG. 15(b). However, the present disclosure is not limited thereto. For example, although the first object 1530 of FIG. 15(a) is displayed at a size larger than that of the first object 1533 of FIG. 15(b), the processor 120 may control the display 160 so as to display the first object 1530 and the first object 533 in a manner in which the index 1531 included in the first object 1530 of FIG. 15(a) is displayed at a size that is the same as that of the index 1531 included in the first object 1533 of FIG. 15(b).

According to an embodiment, the processor 120 may control the display 160 so as to display the second object 1590 and 1591 in the form of fluid. For example, the processor 120 may change the length of the second object 1590 and 1591, provided in the form of fluid, to correspond to a change in the size of the first object 1530 and 1533. For example, the length d1 of the second object 1590 of FIG. 15(a) may be displayed to be longer than the length d1 of the second object 1591 of FIG. 15(b).

According to an embodiment, the processor 120 may control the display 160 such that the form of the index 1580-1 included in the scroll bar 1580 and the second object 1590 of FIG. 15(a), for example, at least one of the size, the thickness, the shape, the pattern, the color, and the like, is displayed to be different from the form of the index 1580-2 included in the scroll bar 1580 and the second object 1591 of FIG. 15(b). However, the present disclosure is not limited thereto.

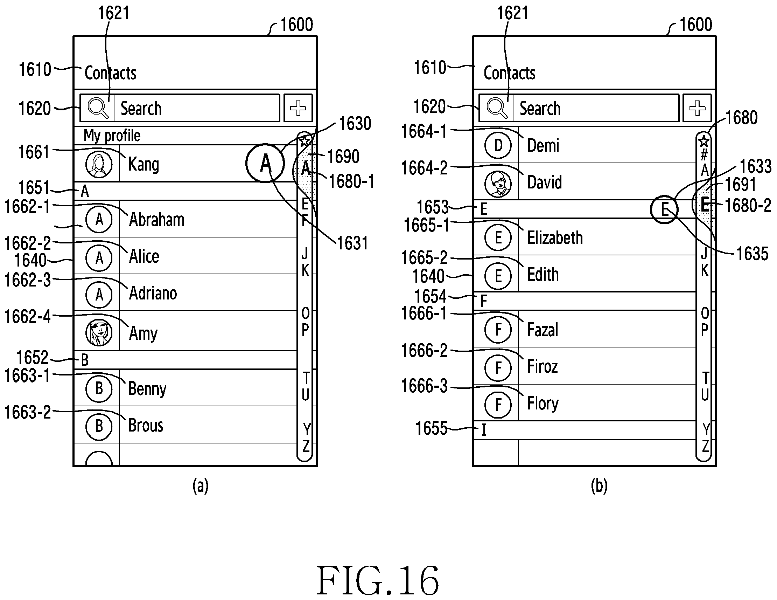

FIG. 16 is a diagram illustrating a method of providing a user interface according to another embodiment of the present disclosure. For example, in FIG. 16, when an item is a contact, at least one of the form of a first object including an index, the form of a second object, and the form of an index included in a scroll bar (e.g., the color of an index) is changed by reflecting the attribute of the item, for example, a plurality of attributes of the item, such as the number of contacts and the number of times that connection has been made with a user of the electronic device 101 during a designated period of time.

According to an embodiment, FIGs. 16(a) and 16(b) illustrate screens, each screen displaying a plurality of items, for example, a plurality of contacts, an object 1630 and 1633 (i.e., a first object) including an index 1631 and 1635 corresponding to at least one contact (or the name or appellation of at least one contact) from among the plurality of contacts, a second object 1690 and 1691, and a scroll bar 1680 including a plurality of indices.

According to an embodiment, the processor 120 may control the display 160 so as to show that the item is a contact in an area 1610 used for displaying the type of item. According to an embodiment, the processor 120 may display a search area 1620 for searching for a contact that the user desires to search for, and when contact information is input into the search area, the processor 120 may control the display 160 so as to display a button 1621 to execute searching. According to an embodiment, the processor 120 may control the display 160 so as to display the picture and the name of a user of the electronic device 101 in an area 1661.When a touch input on the area 1661 is received from the user, the processor 120 may control the display 160 so as to display a screen for displaying or modifying a profile including the contact information of the user.

According to an embodiment, the processor 120 may display at least one contact from among a plurality of contacts and an index of the at least one contact in an area 1640 used for displaying the plurality of contacts (e.g., the names or appellations corresponding to contacts). For example, the processor 120 may display at least one corresponding contact based on indices in areas 1662-1 to 1666-3 used for displaying individual contacts within the area in which the plurality of contacts is displayed. However, the present disclosure is not limited thereto. According to another embodiment, the processor 120 may control the display 160 so as to display an index of at least one contact in an area 1651 to 1655 and to display an index of at least one contact in the area 1662-1 to 1666-3 below the area 1651 to 1655. According to an embodiment, the areas 1651 to 1655 and the indices displayed in the areas 1651 to 1655 may be omitted.

According to an embodiment, the processor 120 may control the display 160 so as to display the scroll bar 1680 including the plurality of indices. According to an embodiment, in FIG. 16(a), the index "A" 1680-1 included in the scroll bar 1680 and the second object 1690 corresponds to at least one contact (Abraham, Alice, Adriano, and Amy)having the index "A", or corresponds to a contact (Adriano) displayed in the center of the area 1640 in which the plurality of contacts is displayed, and the thickness of "A" may be displayed to be thick so as to be distinct from other indices included in the scroll bar. However, the present disclosure is not limited thereto. According to an embodiment, in FIG. 16(b), the index "E" 1680-2 included in the scroll bar 1680 and the second object 1691 corresponds to at least one contact (Elizabeth and Edith) having the index "E", or corresponds to a contact (Edith) displayed in the center of the area 1640 in which the plurality of contacts is displayed, and the thickness of "E" may be displayed to be thick so as to be distinct from other indices included in the scroll bar. However, the present disclosure is not limited thereto.

According to an embodiment, the processor 120 may control the display 160 so as to display the second object 1690 and 1691 so as to overlap the scroll bar 1680. For example, the processor 120 may control the display 160 so as to display the second object 1690 and 1691, which overlappingly includes an index which is included in the scroll bar 1680 and corresponds to the item.

According to an embodiment, the processor 120 may control the display 160 so as to display the first object 1630 and 1633, the second object 1690 and 1691, and the index in the scroll bar by reflecting the attribute of the item, for example, a plurality of attributes of a contact.

For example, in comparison between FIG. 16(a) and FIG. 16(b), the number of contacts (i.e., the number of items or the amount of items) having the index "A" included in the first object 1630 is 4, said contacts being displayed in the areas 1662-1 to 1662-4, and the number of times that a user of the electronic device 101 makes connection with the contact "Adriano" within a month is 10 in FIG. 16(a), and the number of contacts (i.e., the number of items) having the index "E" included in the first object 1633 is 2, said contacts being displayed in the areas 1665-1 to 1665-2, and the number of times that the user of the electronic device 101 makes connection with the contact "Edith" within a month is 5 in FIG. 16(b).

According to an embodiment, the processor 120 may control the display 160 such that the first object 1630 of FIG. 16(a) is displayed to be larger than the first object 1633 of FIG. 16(b) by reflecting the number of contacts.

According to another embodiment, the processor 120 may control the display 160 such that the color of the index 1680-1 included in the second object 1690 is displayed to be different from the color of the index 1680-2 included in the second object 1691 based on the number of times that the user of the electronic device 101 makes connection with a contact within a designated period of time. However, the present disclosure is not limited thereto.

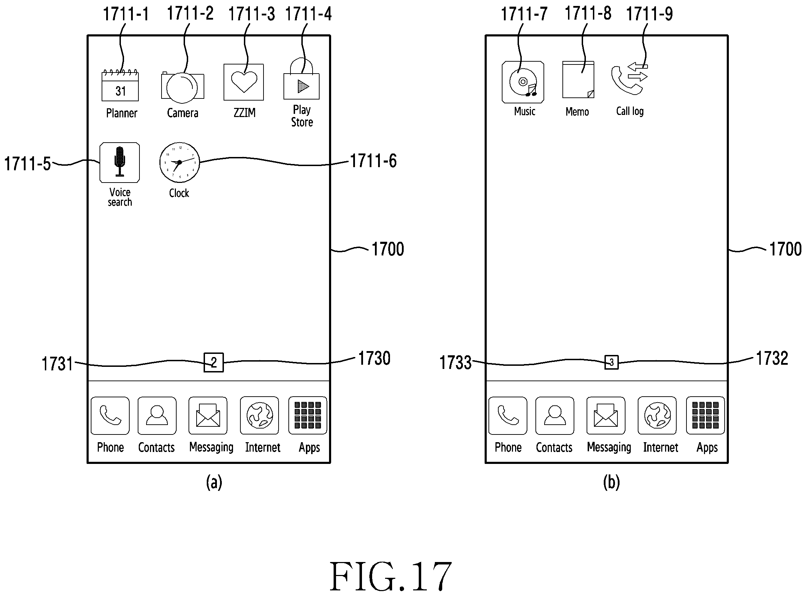

FIG. 17 is a diagram illustrating a method of providing a user interface according to another embodiment of the present disclosure.

Referring to FIG. 17, a plurality of pages of the electronic device 101 corresponds to a home screen or a menu screen. According to an embodiment, the processor 120 may control the display 160 such that the form of an object (or indicator) indicating the current page displayed on a screen 1700 is changed and displayed based on the number of icons displayed on the screen.

For example, the processor 120 may control the display 160 such that, in the state in which a page including 6 icons 1711-1 to 1711-6 is displayed on a screen, as shown in FIG. 17(a), the form (e.g., the size or the like) of an object 1730 and the form of a page number 1731 included in the object 1730 are displayed to be different from the form (e.g., the size or the like) of an object 1732 and the form of a page number 1733 of the object 1732 in the state in which a screen including 3 icons 1711-7 to 1711-9 is displayed, as shown in FIG. 17(b). However, the present disclosure is not limited thereto.

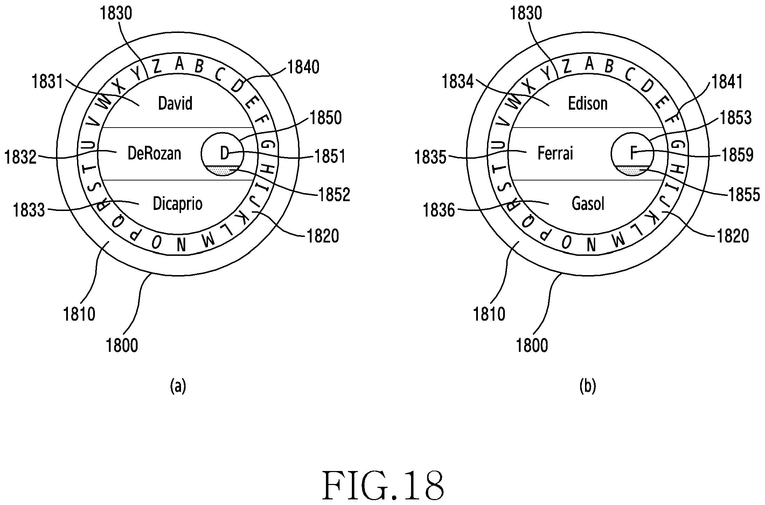

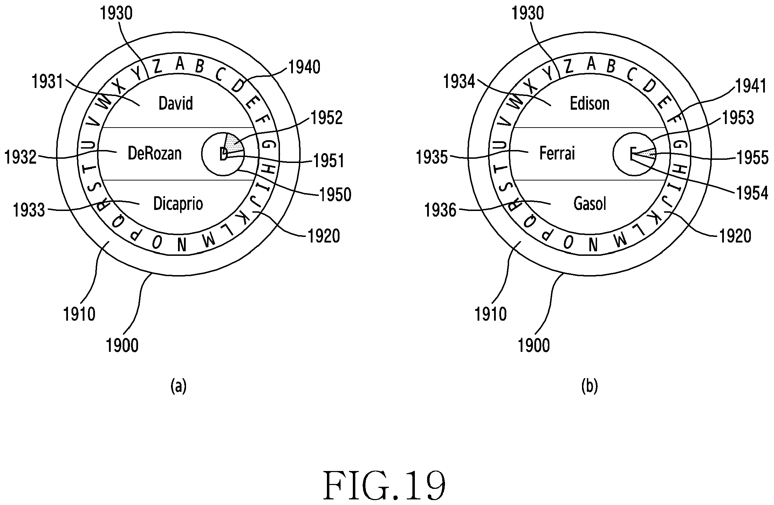

FIGs. 18 and 19 are diagrams illustrating a method of providing a user interface according to an embodiment of the present disclosure. FIGs. 18 and 19 are diagrams illustrating a method in which a wearable device displays a user interface to be different based at least on the attribute of an item.

Referring to FIGs. 18 and 19, the electronic device 101 (e.g., a wearable device) may include a bezel (or the stem of a watch) and the display 160. According to an embodiment, the electronic device 101 may display a plurality of items 1831 to 1836 and a scroll bar 1820 in a screen 1830. According to an embodiment, the electronic device 101 may display a plurality of contacts when a contacts application is executed.

According to an embodiment, as illustrated in FIG. 18(a), the electronic device 101 includes a plurality of items 1831 to 1833 having an index "D", and displays an object 1850 including an index that is the same as the index of the plurality of items 1831 to 1833. According to another embodiment, as illustrated in FIG. 18(b), the electronic device 101 includes an item 1835 having an index "F", and displays an object 1853 including an index that is the same as the index of the item 1835.

According to an embodiment, the electronic device 101 may determine and display the form of the object 1850 and 1853 by reflecting the attribute of the plurality of items 1831 to 1833 and 1835, for example, the number of contacts having the same index. For example, the electronic device 101 may display an area that fills the object 1850 to be different based on the number of contacts corresponding to the index, as illustrated in FIGs. 18(a) and (b). For example, an area 1852 that fills the object 1850 when the number of contacts having an index "D" is 3, as shown in FIG. 18(a), may be displayed to be larger than an area 1855 that fills the object 1853 when the number of contacts having an index "F" is 1, as shown in FIG. 18(b). However, the present disclosure is not limited thereto.

According to an embodiment, the electronic device 101 may display an index 1840 and 1841, which is included in the scroll bar 1820 and corresponds to contacts, so as to be distinct from other indices. For example, the electronic device 101 may display the index 1840 and 1841, which is included in the scroll bar 1820 and corresponds to contacts, in a different size, thickness, shape, and the like, so as to be distinct from other indices. However, the present disclosure is not limited thereto.

According to an embodiment, as illustrated in FIG. 19, the electronic device 101 may display the form of an object 1952 and 1953 which is different from the form of the object 1850 and 1853 of FIG. 18.

For example, the electronic device 101 may determine and display the form of the object 1950 and 1953 by reflecting the attribute of a plurality of items 1931 to 1933 and 1935, for example, the number of contacts including the same index. For example, the electronic device 101 may display an area that fills the object 1950 and 1953, for example, a fan-shaped area, to be different based on the number of contacts corresponding to the index, as illustrated in FIGs. 19(a) and (b). For example, a fan-shaped area 1952 that fills the object 1850 when the number of contacts having an index "D" is 3, as shown in FIG. 19(a), may be displayed to be larger than a fan-shaped area 1955 that fills the object 1953 when the number of contacts having an index "F" is 1, as shown in FIG. 19(b). However, the present disclosure is not limited thereto.

Although FIGs. 18 and 19 illustrate contacts as items, and illustrate the number of contacts as the attribute of the items, the present disclosure is not limited thereto.

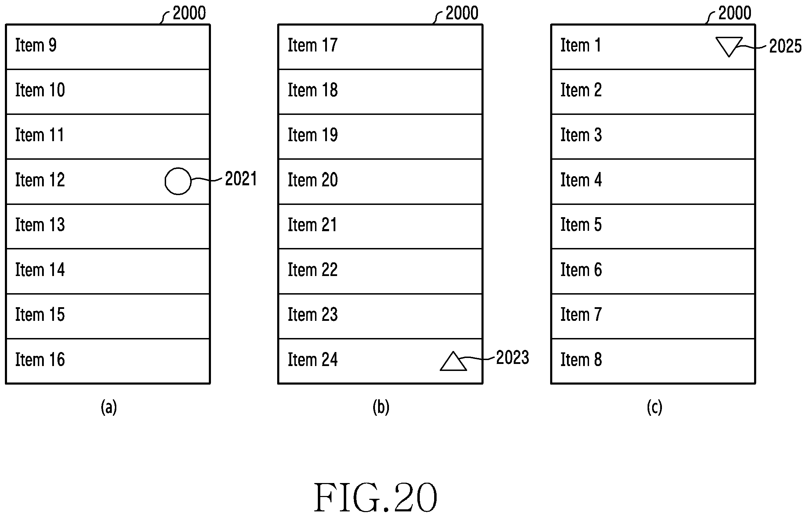

FIG. 20 is a diagram illustrating a method of providing a user interface according to another embodiment of the present disclosure.

According to an embodiment, the processor 120 may change the form of an object, based on the location of at least one item from among a plurality of items.

For example, in the case in which the total number of a plurality of items is 24 and at least one item is arranged in the center of the plurality of items when the plurality of items are arranged, a circular object 2021 may be displayed, as shown in FIG. 20(a). As another example, in the case in which the total number of a plurality of items is 24 and at least one item is arranged at the end of the plurality of items when the plurality of items are arranged, a triangular object 2023 that points upwards may be displayed, as shown in FIG. 20(b). For example, in the case in which the total number of a plurality of items is 24 and at least one item is arranged at the first of the plurality of items when the plurality of items is arranged, a triangular object 2025 that points downwards may be displayed, as shown in FIG. 20(c).

According to an embodiment, the form of the object is not limited to a circular shape, a triangular shape, or the like, and may include a symbol such as an arrow and a polygonal shape such as a quadrangular shape.

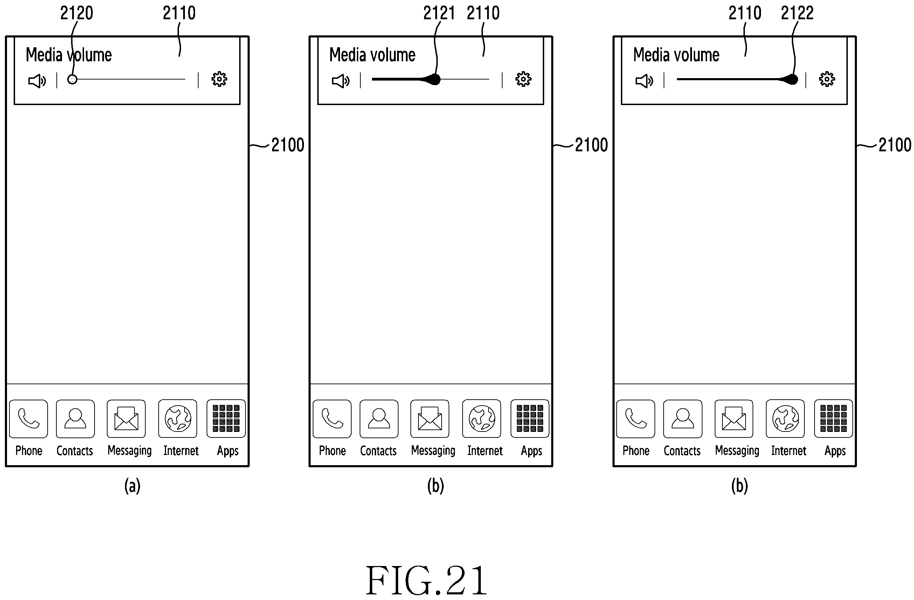

FIG. 21 is a diagram illustrating a method of providing a user interface according to another embodiment of the present disclosure.

Referring to FIG. 21, the processor 120 may display a Ul for adjusting a media volume on a screen 2100. For example, the processor 120 may control the display 160 so as to display a window for adjusting a volume in the form of a quick panel or in the form of a pop-up window.

According to an embodiment, the processor 120 may control the display 160 so as to display the form of a volume adjustment object to be different based on the degree of a volume. For example, the processor 120 may control the display 160 so as to change and display the form of the volume adjustment object, such that the size of the volume adjustment object increases or the volume adjustment object is changed to have a different color as the degree of the volume increases. For example, the processor 120 may display a volume adjustment object 2120 of FIG. 20(a) in a circular shape with a first color, may display a volume adjustment object 2121 of FIG. 20(b) in the form of fluid with a second color, which is larger than the volume adjustment object 2120, and may display a volume adjustment object 2122 of FIG. 20(c) in the form of fluid with a third color, which is larger than the volume adjustment object 2120 and the volume adjustment object 2121.

The form of the volume adjustment object that is changed as the volume is adjusted is not limited to the size and the color.

Also, the structure of data used in the above-described embodiments of the present disclosure may be recorded in a computer-readable recording medium via various means. The computer-readable recording medium may include a storage medium such as a magnetic storage (e.g., ROM, floppy disk, hard disk, or the like), an optical reader (e.g., CD-ROM, DVD, or the like), and the like.

The present disclosure has been discussed above in connection with the exemplary embodiments thereof. It will be understood by those skilled in the art to which the present disclosure belongs that the present disclosure may be implemented in modified forms without departing from the essential characteristics of the present disclosure. Therefore, the embodiments disclosed herein should be considered from an illustrative point of view, rather than a limitative point of view. The scope of the present disclosure is found not in the above description but in the accompanying claims, and all differences falling within the scope equivalent to the claims should be construed as being included in the present disclosure.

## Claims

1. A method of displaying a user interface by an electronic device, the method comprising:
displaying a plurality of items on a screen;
displaying a first object including an index related to at least one item from among the plurality of displayed items;
scrolling the plurality of items, based at least on a user input; and
changing a form of the first object, based at least on an attribute of at least one item displayed by the scrolling operation.

2. The method of claim 1, wherein the attribute of the at least one item comprises at least one from among a number of the at least one item, a function set by a user in association with the at least one item, a number of times that connection is made with the at least one item within a designated period of time, a most recent time at which connection is made with the at least one item, a group to which the at least one item belongs, a time at which the at least one item is generated or modified, a time at which the at least one item is downloaded, and a format of the at least one item.

3. The method of claim 1, wherein the changing the form of the first object further comprises: changing the form of the first object and a form of the index included in the first object, and
the changing the form of the first object and the form of the index included in the first object further comprises: changing at least one of a size, a shape, a color, and a pattern of at least one of the first object and the index included in the first object.

4. The method of claim 1, further comprising: displaying a scroll bar including a plurality of indices related to the plurality of displayed items.

5. The method of claim 4, wherein the changing the form of the first object further comprises:
changing at least one from among the form of the first object, a form of the index included in the first object, and a form of an index corresponding to the index included in the first object from among the plurality of indices.

6. The method of claim 1, further comprising:
displaying a scroll bar, including a plurality of indices related to the plurality of displayed items, and a second object that is disposed in a location that overlaps the scroll bar and corresponds to the first object.

7. The method of claim 6, wherein the changing the form of the first object further comprises:
changing at least one from among the form of the first object, a form of the index included in the first object, a form of an index corresponding to the index included in the first object from among the plurality of indices, and a form of the second object.

8. The method of claim 1, wherein the user input comprises a touch input on the first object and a touch input on an area displaying the plurality of displayed items.

9. An electronic device, comprising:
a display; and
a processor,
wherein the processor is configured to perform:
displaying a plurality of items on a screen;
displaying a first object including an index related to at least one item from among the plurality of displayed items;
scrolling the plurality of items, based at least on a user input; and
controlling the display so as to change a form of the first object, based at least on an attribute of the at least one item displayed by the scrolling operation.

10. The electronic device of claim 9, wherein the attribute of the at least one item comprises: at least one from among a number of the at least one items, a function set by a user in association with the at least one item, a number of times that connection is made with the at least one item within a designated period of time; a most recent time at which connection is made with the at least one item, a group to which the at least one item belongs, and a time at which the at least one item is generated or modified, a time at which the at least one item is downloaded, and a format of the at least one item.

11. The electronic device of claim 9, wherein the processor is configured to control the display so as to change at least one of a size, a shape, a color, and a pattern of at least one of the first object and the index included in the first object, so as to change the form of the first object and a form of the index included in the first object.

12. The electronic device of claim 9, wherein the processor is configured to control the display so as to further display a scroll bar including a plurality of indices related to the plurality of displayed items.

13. The electronic device of claim 12, wherein the processor is configured to control the display so as to change at least one from among the form of the first object, a form of the index included in the first object, and a form of an index corresponding to the index included in the first object from among the plurality of indices.

14. The electronic device of claim 11, wherein the processor is configured to control the display so as to display a scroll bar including a plurality of indices related to the plurality of displayed items, and a second object which is disposed in a location that overlaps the scroll bar and corresponds to the first object.

15. The electronic device of claim 14, wherein the processor is configured to control the display so as to change at least one from among the form of the first object, the form of the index included in the first object, a form of an index corresponding to the index included in the first object from among the plurality of indices, and a form of the second object.
